# EUROPEAN PATENT SPECIFICATION

(11) **EP 4 230 707 B1**
(45) Date of publication and mention of the grant of the patent: **09.09.2026**
(21) Application number: 23170305.9
(22) Date of filing: 16.07.2019
(51) Int. Cl.: C09K 5/04, F25B 1/10, B60H 1/32, F25B 5/02, F25B 7/00, F25B 13/00, F25B 31/00, F25B 47/02, F25B 39/04

(54) **REFRIGERANT CYCLE APPARATUS**
KÄLTEMITTELKREISLAUFVORRICHTUNG
APPAREIL À CYCLE DE RÉFRIGÉRANT

(30) Priority: 17.07.2018 JP 2018134448; 04.12.2018 JP 2018227398; 07.12.2018 JP 2018230259; 30.01.2019 JP 2019013979; 30.01.2019 JP 2019013974; 05.02.2019 JP 2019018617; 16.04.2019 JP 2019078133; 25.04.2019 JP 2019084708; 17.06.2019 JP 2019112406; 21.06.2019 JP 2019115584; 08.07.2019 WO PCT/JP2019/027031
(43) Date of publication of application: 23.08.2023
(60) Divisional application: 25216175.7 / 4 711 434
(62) Document number(s) of the earlier application(s) in accordance with Art. 76 EPC: 19836951.4 / 3 825 379
(73) Proprietor: Daikin Industries, Ltd., Osaka-shi, Osaka 530-0001 (JP)
(72) Inventor: Fujinaka, Shinichi, Osaka-shi, Osaka, 530-8323 (JP); Tanaka, Masaru, Osaka-shi, Osaka, 530-8323 (JP); Ohkubo, Shun, Osaka-shi, Osaka, 530-8323 (JP); Itano, Mitsushi, Osaka-shi, Osaka, 530-8323 (JP); Yotsumoto, Yuuki, Osaka-shi, Osaka, 530-8323 (JP); Mizuno, Akihito, Osaka-shi, Osaka, 530-8323 (JP); Gotou, Tomoyuki, Osaka-shi, Osaka, 530-8323 (JP); Yamada, Yasufu, Osaka-shi, Osaka, 530-8323 (JP); Kuroki, Hitomi, Osaka-shi, Osaka, 530-8323 (JP); Tsuchiya, Tatsumi, Osaka-shi, Osaka, 530-8323 (JP); Gobou, Kenji, Osaka-shi, Osaka, 530-8323 (JP); Karube, Daisuke, Osaka-shi, Osaka, 530-8323 (JP); Takakuwa, Tatsuya, Osaka-shi, Osaka, 530-8323 (JP)
(74) Representative: Hoffmann Eitle

(56) References cited:
- US-A1- 2015 376 486
- US-A1- 2016 333 243
- US-A1- 2017 058 172
- US-A1- 2017 058 173

## Description

### Technical Field

It relates to a refrigerant cycle apparatus for freezing or cold storage.

### Background Art

Hitherto, heat cycle systems such as apparatuses for freezing or cold storage frequently use R410A or R404A as a refrigerant. R410A is a two-component mixed refrigerant of (CH2F2; HFC-32 or R32) and pentafluoroethane (C2HF5; HFC-125 or R125), and is a pseudo-azeotropic composition. R404A is a three-component mixed refrigerant of R125, R134a, and R143a, and is a pseudo-azeotropic composition.

However, the global warming potential (GWP) of R410A is 2088, and the global warming potential (GWP) of R404A is 3920. In recent years, a refrigerant having a low GWP tends to be used due to an increasing concern about global warming.

Due to this, for example, PTL 1 (International Publication No. 2015/141678) suggests a low-GWP mixed refrigerant alternative to R410A. Moreover, PTL 2 (Japanese Unexamined Patent Application Publication No. 2018-184597) suggests various low-GWP mixed refrigerants alternative to R404A

US2017/058173 A1, US2017/058172 A1 and US2016/333243 A1 disclose working fluids for a heat cycle containing 1,2-difluoroethylene and 2,3,3,3-tetrafluoropropene.

### Summary of Invention

### Technical Problem

Hitherto, no study has been made which refrigerant among refrigerants with low GWPs should be used for a refrigerant cycle apparatus for freezing or cold storage.

### Solution to Problem

A refrigerant cycle apparatus for freezing or cold storage according to the invention includes a refrigerant circuit and a refrigerant enclosed in the refrigerant circuit. The refrigerant circuit includes a compressor, a radiator, a decompressing portion, and a heat absorber. The refrigerant comprises HFO-1132(E) and HFO-1234yf. A content rate of HFO-1132(E) is 21.0 to 28.4 mass% and a content rate of HFO-1234yf is 79.0 to 71.6 mass%, based on a total mass of HFO-1132(E) and HFO-1234yf. A content rate, based on the total mass of the refrigerant, of refrigerant other than HFO-1132(E) and HFO-1234yf is 0.5 mass% or less.

A refrigerant cycle apparatus for freezing or cold storage according to a further aspect of the invention is the refrigerant cycle for freezing or cold storage according to the invention, wherein the refrigerant consists only of HFO-1132(E) and HFO-1234yf.

### Brief Description of Drawings

Fig. 1T is a schematic view of an experimental apparatus for determining flammability (flammability or non-flammability) .
Fig. 2F is a schematic view of an apparatus for use in a flammability test.
Fig. 2G is a schematic view illustrating one example of a countercurrent heat exchanger.
Fig. 2H are schematic views each illustrating one example of a countercurrent heat exchanger, and (a) is a plan view and (b) is a perspective view.
Fig. 2I1 is a schematic view illustrating one aspect of a refrigerant circuit in a refrigerator of the present disclosure.

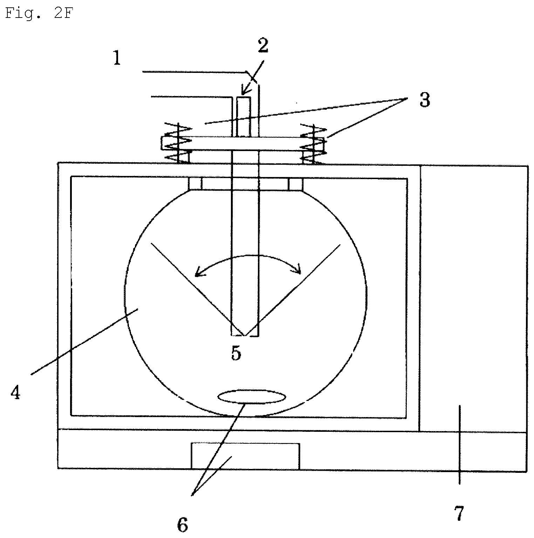

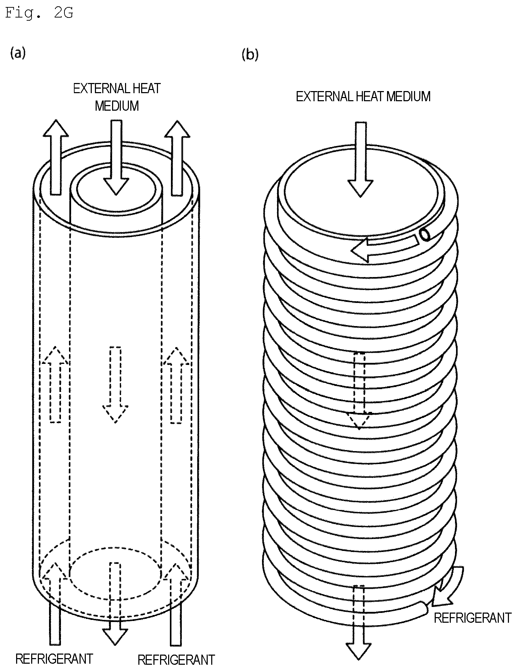

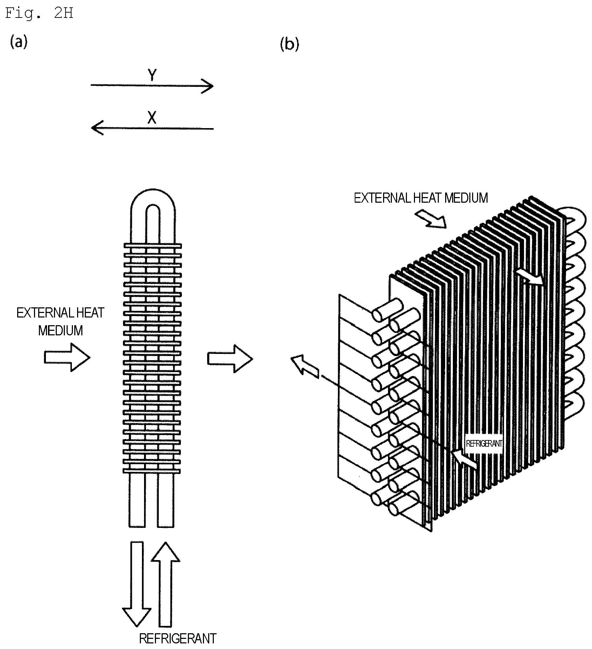

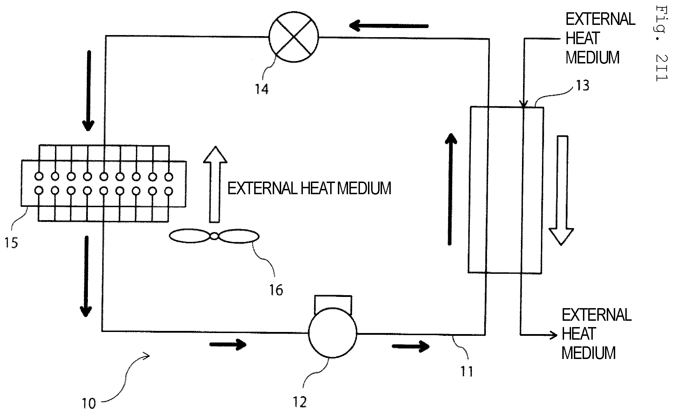

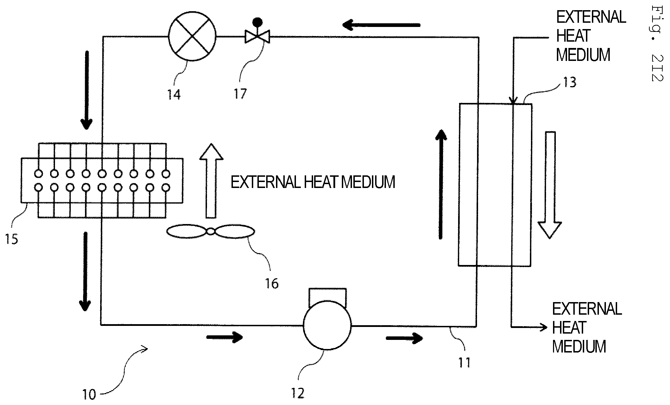

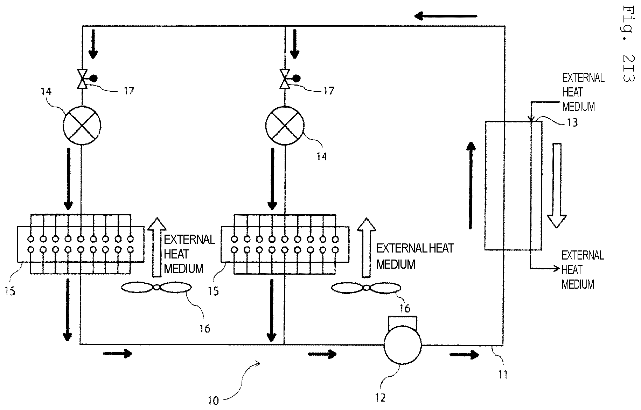

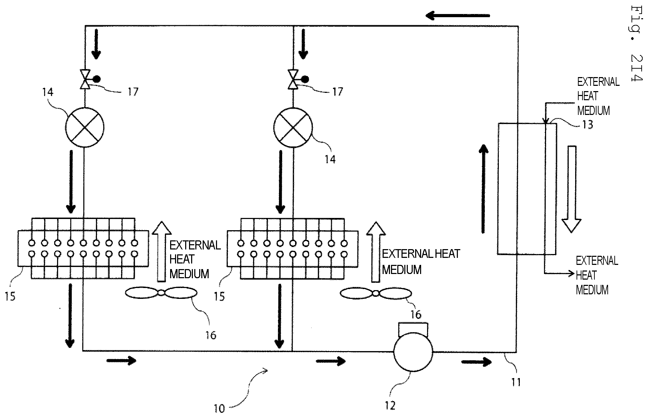

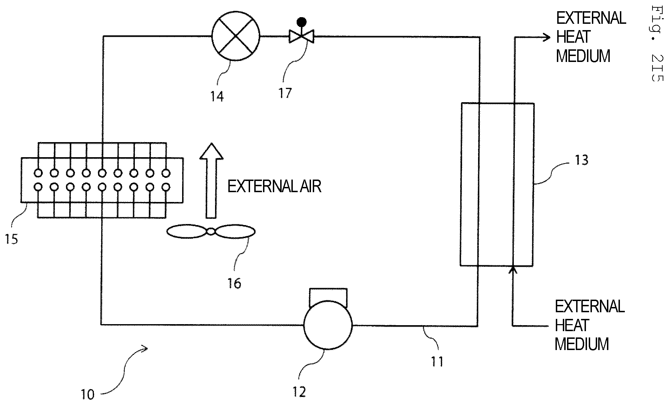

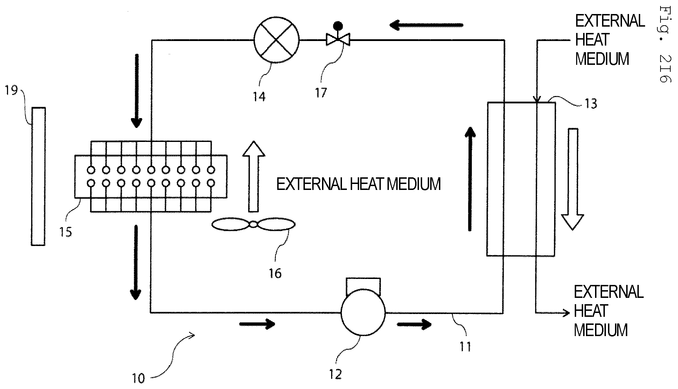

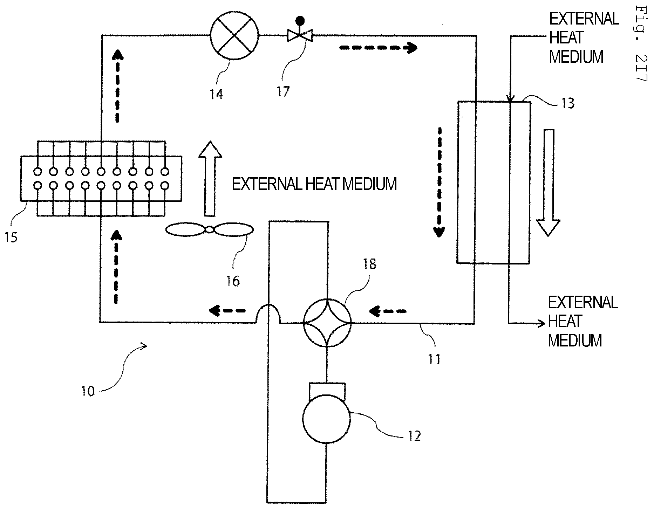

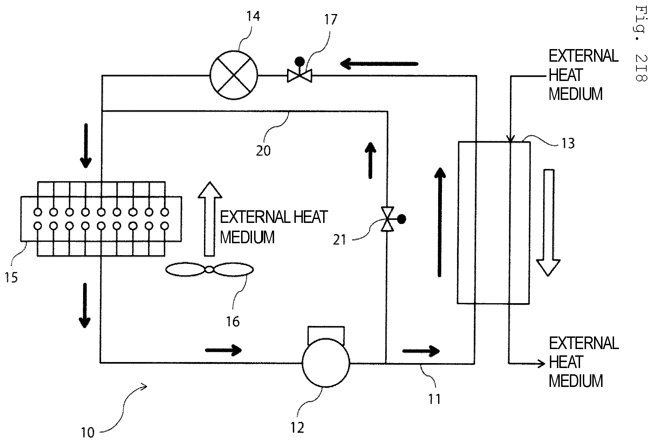

Fig. 2I2 is a schematic view illustrating a variant of the refrigerant circuit in Fig. 2I1.
Fig. 2I3 is a schematic view illustrating a variant of the refrigerant circuit in Fig. 2I2.
Fig. 2I4 is a schematic view illustrating a variant of the refrigerant circuit in Fig. 2I2.
Fig. 2I5 is a schematic view for explaining an off-cycle defrost.
Fig. 2I6 is a schematic view for explaining a heating defrost.
Fig. 2I7 is a schematic view for explaining a reverse cycle hot gas defrost.
Fig. 2I8 is a schematic view for explaining a normal cycle hot gas defrost.

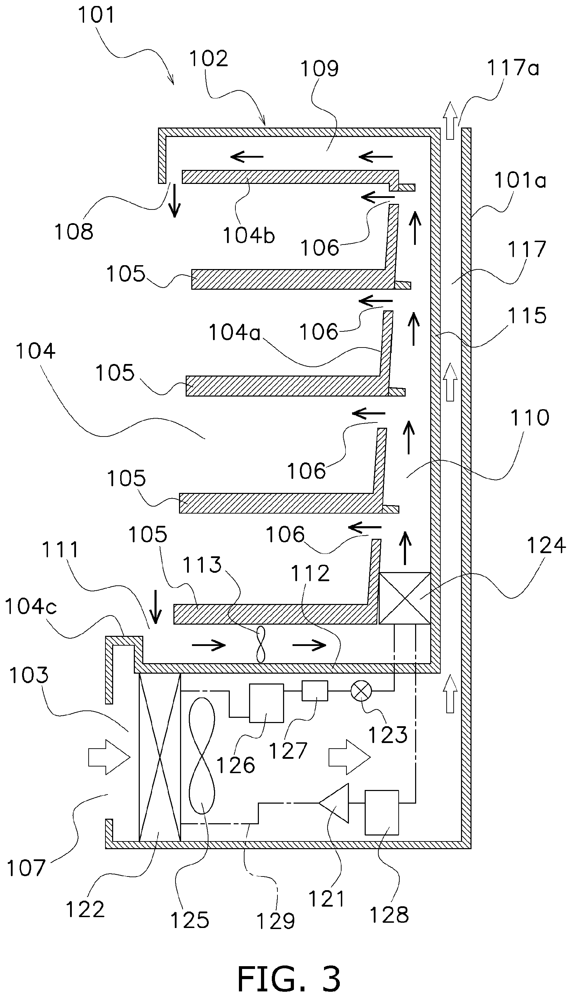

Fig. 3 is a vertically sectioned side view of a built-in type open showcase.

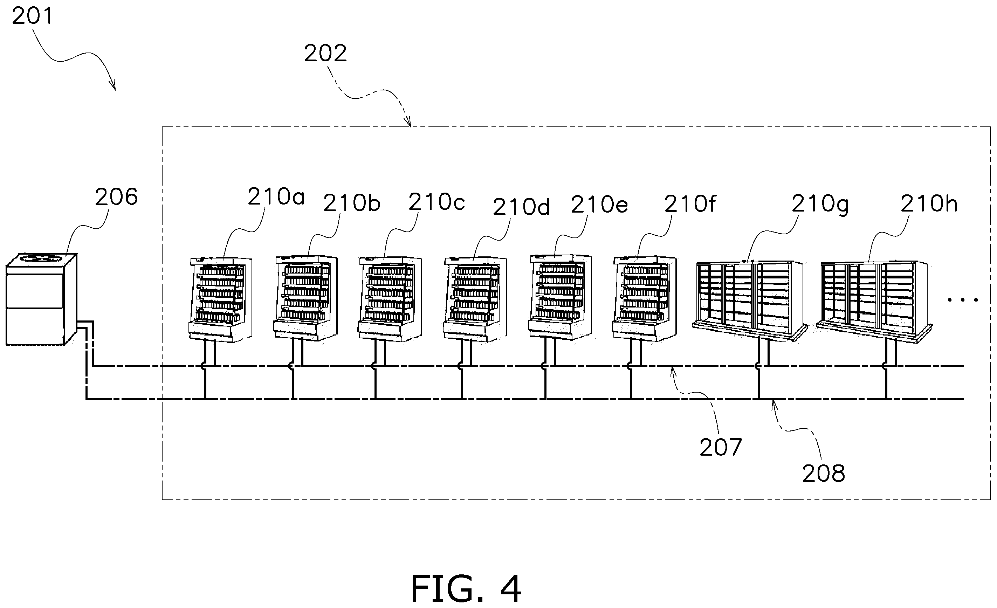

Fig. 4 is a schematic view of a separate-installation type showcase cooling apparatus.

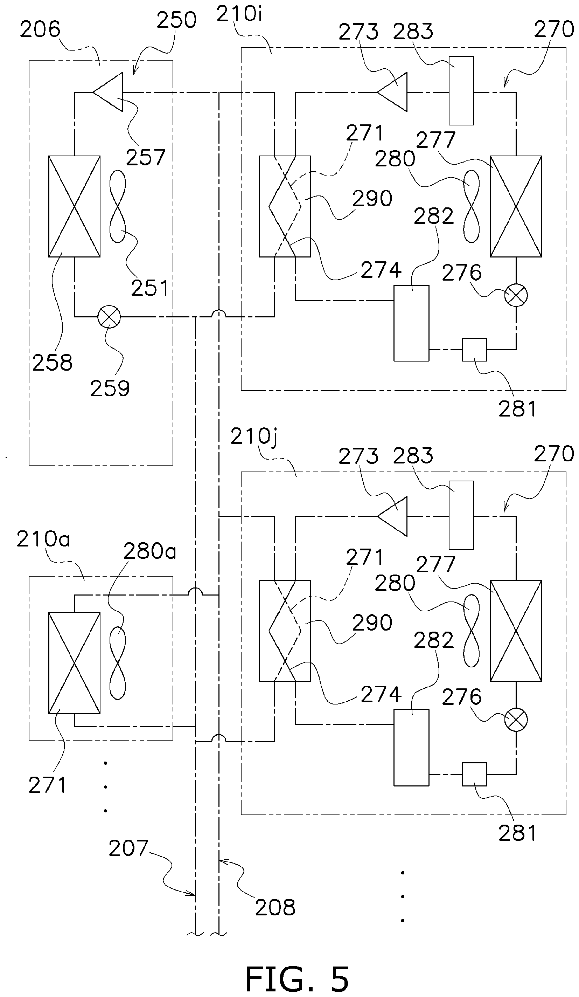

Fig. 5 is a refrigerant circuit diagram of the showcase cooling apparatus.

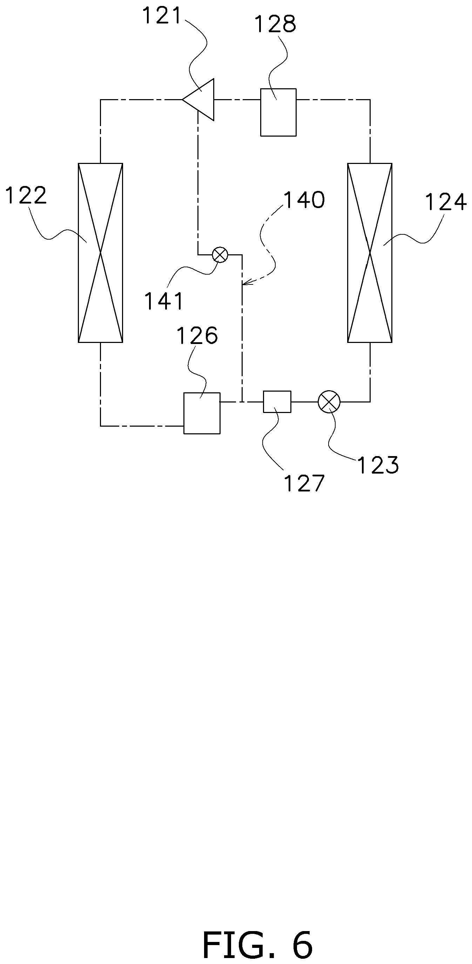

Fig. 6 is a refrigerant circuit diagram of a showcase having a function of intermediate injection.

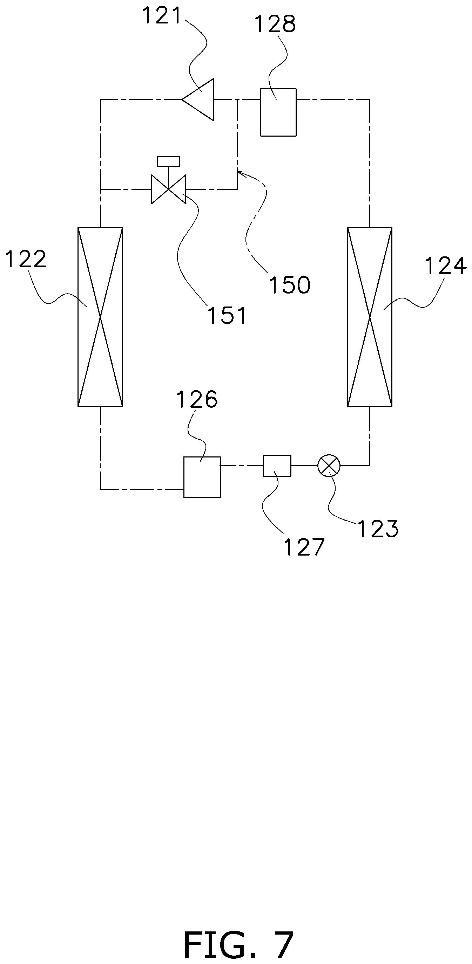

Fig. 7 is a refrigerant circuit diagram of a showcase that adjusts capacity using a bypass circuit.

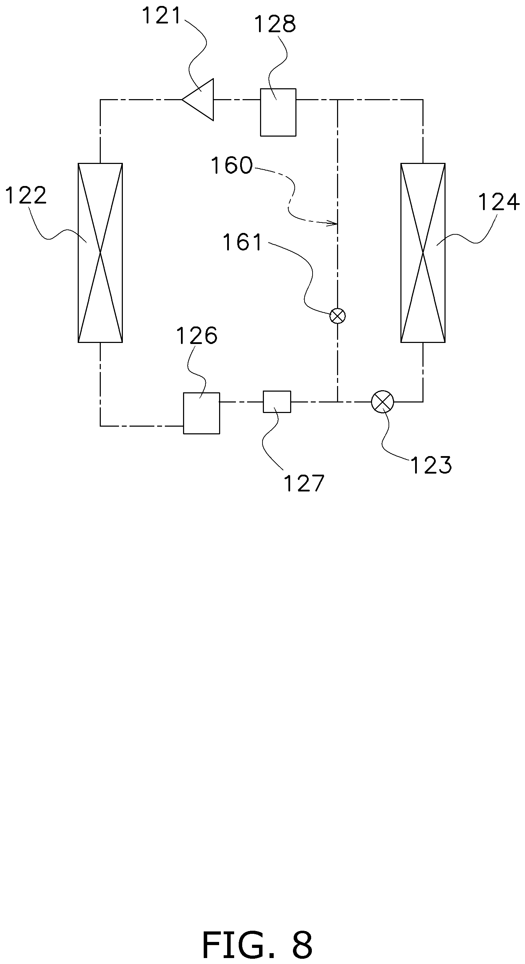

Fig. 8 is a refrigerant circuit diagram of a showcase having a function of suction injection.

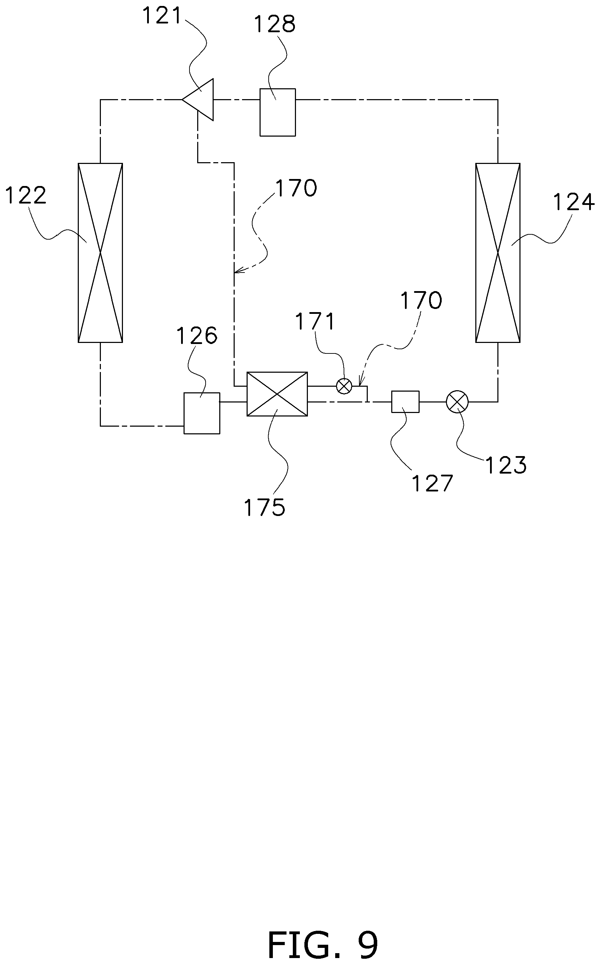

Fig. 9 is a refrigerant circuit diagram of a showcase having a function of intermediate injection and a function of subcooling.

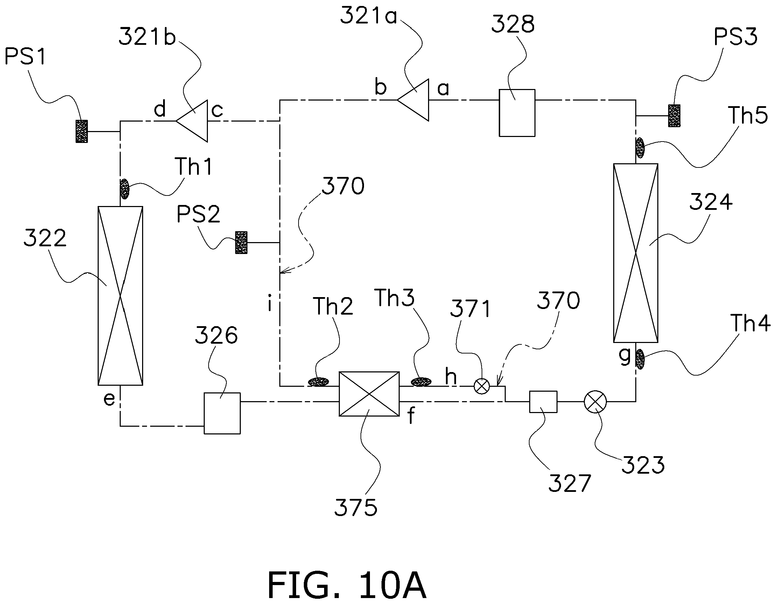

Fig. 10A is a refrigerant circuit diagram of two-stage compression and single-stage expansion.

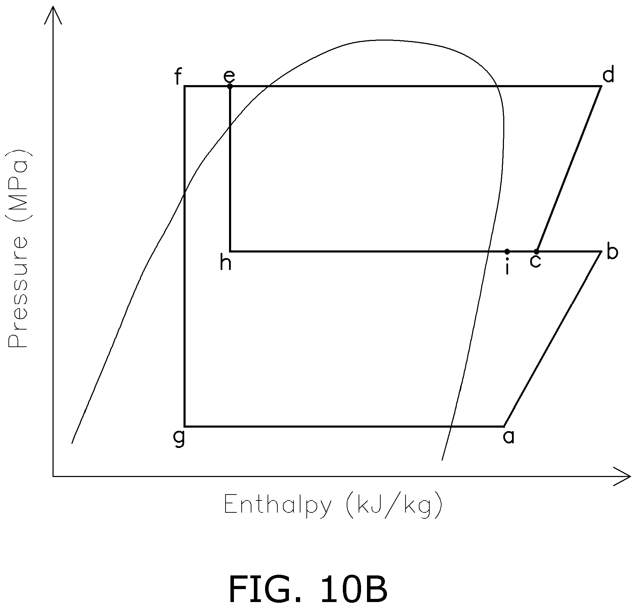

Fig. 10B is a Mollier diagram of the two-stage compression and single-stage expansion.

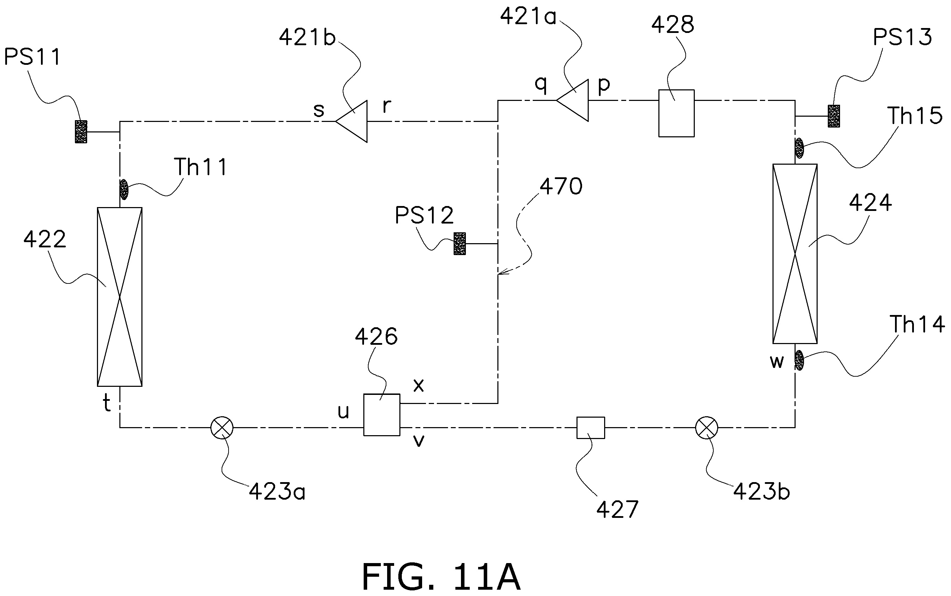

Fig. 11A is a refrigerant circuit diagram of two-stage compression and two-stage expansion.

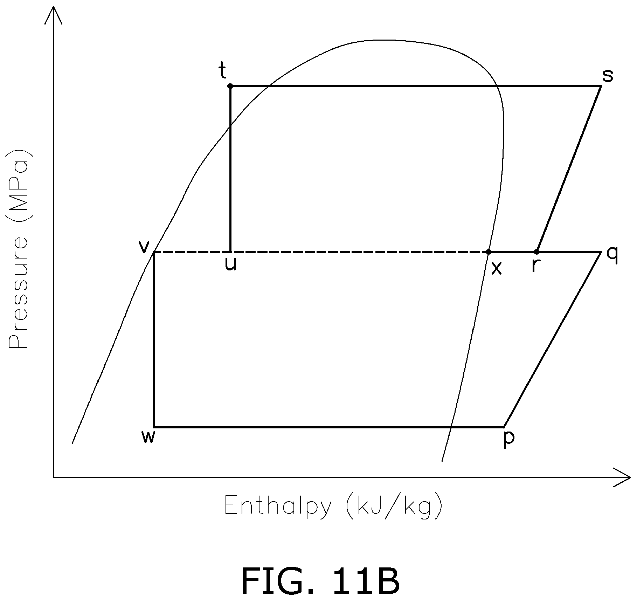

Fig. 11B is a Mollier diagram of the two-stage compression and two-stage expansion.

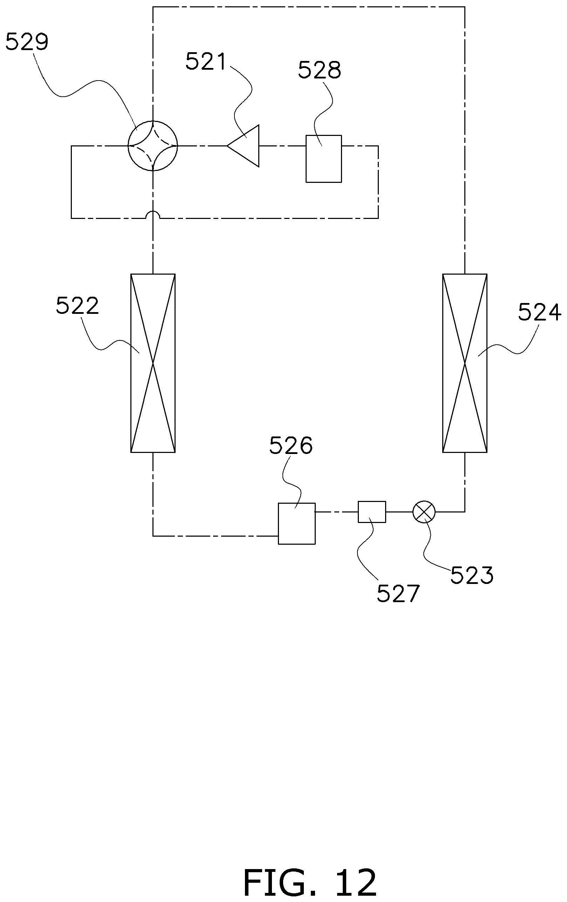

Fig. 12 is a refrigerant circuit diagram having a hot-gas defrosting function.

### DESCRIPTION OF EMBODIMENTS

### (1-1) Definition of Terms

The term "refrigerant" herein includes at least any compound prescribed in ISO817 (International Organization for Standardization) and marked by a refrigerant number (ASHRAE number) representing the type of a refrigerant with R at the beginning, and further includes one having properties equivalent to those of such a refrigerant even if such one is not marked by any refrigerant number. Refrigerants are roughly classified to "fluorocarbon-based compounds" and "non-fluorocarbon-based compounds" in terms of the structure of such compounds. Such "fluorocarbon-based compounds" include chlorofluorocarbon (CFC), hydrochlorofluorocarbon (HCFC) and hydrofluorocarbon (HFC). Such "non-fluorocarbon-based compounds" include propane (R290), propylene (R1270), butane (R600), isobutene (R600a), carbon dioxide (R744) and ammonia (R717).

The term "composition including a refrigerant" herein includes at least (1) a refrigerant itself (including a mixture of refrigerants), (2) a composition that further includes other component and that can be mixed with at least a refrigerator oil and thus used to obtain a working fluid for a refrigerator, and (3) a working fluid for a refrigerator, containing a refrigerator oil. The composition (2) among such three aspects is herein designated as a "refrigerant composition" so as to be distinguished from the refrigerant itself (including a mixture of refrigerants). The working fluid (3) for a refrigerator is designated as a "refrigerator oil-containing working fluid" so as to be distinguished from the "refrigerant composition".

A first type of the term "alternative" herein means that, in a case where the term is used in the context indicating that a second refrigerant corresponds to an "alternative" of a first refrigerant, the second refrigerant can be used for operating under optimal conditions, if necessary, by undergoing only the change of a few parts (at least one of a refrigerator oil, a gasket, a packing, an expansion valve, a dryer and other parts) in any equipment designed for operating with the first refrigerant, and adjustment of the equipment. That is, this type means that the same equipment is operated with such an "alternative" of the refrigerant. An aspect of the "alternative" in this type can be any of "drop in alternative", "nearly drop in alternative" and "retrofit", in which the degree of the change or the adjustment necessary for replacement with the second refrigerant is lower in the listed order.

A second type of the term "alternative" includes use of any equipment designed for operating with the second refrigerant, in which the second refrigerant is mounted, for the same application as the existing application of the first refrigerant. This type means that the same application, with such an "alternative" of the refrigerant, is provided.

The term "refrigerator" herein means a general apparatus that draws heat from an object or space to thereby allow such an object or space to be at a temperature lower than the temperature of a surrounding atmosphere and is kept at such a low temperature. In other words, the refrigerator refers to a conversion apparatus that gains energy from the outside and works for energy conversion in order to transfer heat from any place at a lower temperature to any place at a higher temperature.

Any refrigerant having "non-flammability" in the present disclosure means that the WCF composition (Worst case of formulation for flammability), as a composition exhibiting most flammability, among acceptable concentrations of the refrigerant is rated as "Class 1" in US ANSI/ASHRAE Standard 34-2013.

Any refrigerant having "low flammability" herein means that the WCF composition is rated as "Class 2" in US ANSI/ASHRAE Standard 34-2013.

Any refrigerant having "ASHRAE non-flammability" in the present disclosure means that the WCF composition or WCFF composition can be specified as exhibiting non-flammability according to a test based on the measurement apparatus and the measurement method according to ASTM E681-2009 [Standard Test Method for Concentration Limits of Flammability of Chemicals (Vapors and Gases)], and is classified to "Class 1 ASHRAE non-flammability (WCF non-flammability" or "Class 1 ASHRAE non-flammability (WCFF non-flammability)". The WCFF composition (Worst case of fractionation for flammability: mixed composition causing most flammability) is specified by performing a leak test in storage, transport and use based on ANSI/ASHRAE 34-2013.

Any refrigerant having "lower flammability" herein means that the WCF composition is rated as "Class 2L" in US ANSI/ASHRAE Standard 34-2013.

The "temperature glide" can be herein restated as the absolute value of the difference between the start temperature and the end temperature in the course of phase transition of the composition including a refrigerant of the present disclosure, in any constituent element in a heat cycle system.

The "in-car air conditioning equipment" herein means one refrigerating apparatus for use in cars such as a gasoline-fueled car, a hybrid car, an electric car and a hydrogen-fueled car. The in-car air conditioning equipment refers to a refrigerating apparatus including a refrigeration cycle that allows a liquid refrigerant to perform heat exchange in an evaporator, allows a compressor to suction a refrigerant gas evaporated, allows a refrigerant gas adiabatically compressed to be cooled and liquefied by a condenser, furthermore allows the resultant to pass through an expansion valve and to be adiabatically expanded, and then anew feeds the resultant as a liquid refrigerant to an evaporating machine.

The "turbo refrigerator" herein means one large-sized refrigerator. The turbo refrigerator refers to a refrigerating apparatus including a refrigeration cycle that allows a liquid refrigerant to perform heat exchange in an evaporator, allows a centrifugal compressor to suction a refrigerant gas evaporated, allows a refrigerant gas adiabatically compressed to be cooled and liquefied by a condenser, furthermore allows the resultant to pass through an expansion valve and to be adiabatically expanded, and then anew feeds the resultant as a liquid refrigerant to an evaporating machine. The "large-sized refrigerator" refers to a large-sized air conditioner for air conditioning in building units.

The "saturation pressure" herein means the pressure of saturated vapor.

The "discharge temperature" herein means the temperature of a mixed refrigerant at a discharge port in a compressor.

The "evaporating pressure" herein means the saturation pressure at an evaporating temperature.

The "critical temperature" herein means the temperature at a critical point, and means a boundary temperature where gas cannot turn to any liquid at a temperature more than such a boundary temperature even if compressed.

The GWP herein means the value based on the fourth report of IPCC (Intergovernmental Panel on Climate Change).

The description "mass ratio" herein has the same meaning as the description "composition ratio".

### (1-2) Refrigerant

Although the details thereof are described later, the refrigerant 2C4 according to the present disclosure (sometimes referred to as "the refrigerant according to the present disclosure") can be used as a refrigerant.

### (1-3) Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

### (1-3-1) Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### (1-3-2) Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer. FC-14 (tetrafluoromethane, CF₄) HCC-40 (chloromethane, CH₃Cl) HFC-23 (trifluoromethane, CHF₃) HFC-41 (fluoromethane, CH₃Cl) HFC-125 (pentafluoroethane, CF₃CHF₂) HFC-134a (1,1,1,2-tetrafluoroethane, CF₃CH₂F) HFC-134 (1,1,2,2-tetrafluoroethane, CHF₂CHF₂) HFC-143a (1,1,1-trifluoroethane, CF₃CH₃) HFC-143 (1,1,2-trifluoroethane, CHF₂CH₂F) HFC-152a (1,1-difluoroethane, CHF₂CH₃) HFC-152 (1,2-difluoroethane, CH₂FCH₂F) HFC-161 (fluoroethane, CH₃CH₂F) HFC-245fa (1,1,1,3,3-pentafluoropropane, CF₃CH₂CHF₂) HFC-236fa (1,1,1,3,3,3-hexafluoropropane, CF₃CH₂CF₃) HFC-236ea (1,1,1,2,3,3-hexafluoropropane, CF₃CHFCHF₂) HFC-227ea (1,1,1,2,3,3,3-heptafluoropropane, CF₃CHFCF₃) HCFC-22 (chlorodifluoromethane, CHClF₂) HCFC-31 (chlorofluoromethane, CH₂ClF) CFC-1113 (chlorotrifluoroethylene, CF₂=CClF) HFE-125 (trifluoromethyl-difluoromethyl ether, CF₃OCHF₂) HFE-134a (trifluoromethyl-fluoromethyl ether, CF₃OCH₂F) HFE-143a (trifluoromethyl-methyl ether, CF₃OCH₃) HFE-227ea (trifluoromethyl-tetrafluoroethyl ether, CF₃OCHFCF₃) HFE-236fa (trifluoromethyl-trifluoroethyl ether, CF₃OCH₂CF₃)

The refrigerant composition according to the present disclosure may contain one or more tracers at a total concentration of about 10 parts per million by weight (ppm) to about 1000 ppm, based on the entire refrigerant composition. The refrigerant composition according to the present disclosure may preferably contain one or more tracers at a total concentration of about 30 ppm to about 500 ppm, and more preferably about 50 ppm to about 300 ppm, based on the entire refrigerant composition.

### (1-3-3) Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### (1-3-4) Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

### (1-3-5) Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

### (1-4) Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

### (1-4-1) Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally contain at least one additive. Examples of additives include compatibilizing agents described below.

### (1-4-2) Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### (1-6-3-4) Refrigerant 2C4

The refrigerant included in the composition of the present disclosure includes, in one aspect, HFO-1132(E) and HFO-1234yf, and the content rate of HFO-1132(E) is 21.0 to 28.4 mass% and the content rate of HFO-1234yf is 79.0 to 71.6 mass% based on the total mass of HFO-1132(E) and HFO-1234yf. The refrigerant is sometimes referred to as "refrigerant 2C4".

The refrigerant 2C4, which has such a configuration, thus has various characteristics of (1) a sufficiently low GWP (100 or less), (2) a COP comparable with that of R1234yf, and (3) a refrigerating capacity relative to that of R1234yf of 140% or more, and (4) lower flammability (Class 2L) according to ASHRAE Standard. Furthermore, in such a case, the refrigerant 2C4 has a saturation pressure at a saturation temperature of -10°C, of 0.380 MPa or more and 0.420 MPa or less, and can be applied to a commercially available refrigerating apparatus for R1234yf without any significant change in design.

The content rate of HFO-1132(E) is 21.0 mass% or more based on the total mass of HFO-1132(E) and HFO-1234yf in the refrigerant 2C4, thereby allowing a refrigerating capacity relative to that of R1234yf of 140% or more to be obtained. The content rate of HFO-1132(E) is 28.4 mass% or less based on the total mass of HFO-1132(E) and HFO-1234yf in the refrigerant 2C4, thereby allowing a critical temperature of 83.5°C or more to be easily ensured.

The refrigerating capacity relative to that of R1234yf in the refrigerant 2C4 may be 140% or more, and is preferably 142% or more, more preferably 143% or more, further preferably 145% or more, particularly preferably 146% or more.

The refrigerant 2C4 has a GWP of 100 or less, and thus can remarkably suppress the environmental load from the viewpoint of global warming as compared with other general-purpose refrigerants.

The refrigerant 2C4 is preferably high in ratio of the driving force consumed in the refrigeration cycle and the refrigerating capacity (coefficient of performance (COP)), relative to that of R1234yf, from the viewpoint of energy consumption efficiency, and specifically, the COP relative to that of R1234yf is preferably 95% or more, more preferably 96% or more, further preferably 97% or more, particularly preferably 98% or more.

The content rate of HFO-1132(E) is preferably 21.5 to 28.0 mass% and the content rate of HFO-1234yf is preferably 78.5 to 72.0 mass% based on the total mass of HFO-1132(E) and HFO-1234yf in the refrigerant 2C4. In such a case, the refrigerant 2C4 has various characteristics of a GWP of 100 or less, a COP relative to that of R1234yf of 98% or more, a refrigerating capacity relative to that of R1234yf of 140% or more, lower flammability (Class 2L) according to ASHRAE Standard, a discharge temperature of 65.0°C or less, and a critical temperature of 83.5°C or more. Furthermore, in such a case, the refrigerant 2C4 has a saturation pressure at a saturation temperature of -10°C, of 0.383 MPa or more and 0.418 MPa or less, and can be applied to a commercially available refrigerating apparatus for R1234yf without any significant change in design.

The content rate of HFO-1132(E) is more preferably 22.0 to 27.7 mass% and the content rate of HFO-1234yf is more preferably 78.0 to 72.3 mass% based on the total mass of HFO-1132(E) and HFO-1234yf in the refrigerant 2C4. In such a case, the refrigerant 2C4 has various characteristics of a GWP of 100 or less, a COP relative to that of R1234yf of 98% or more, a refrigerating capacity relative to that of R1234yf of 140% or more, lower flammability (Class 2L) according to ASHRAE Standard, a discharge temperature of 65.0°C or less, and a critical temperature of 83.5°C or more. Furthermore, in such a case, the refrigerant 2C4 has a saturation pressure at a saturation temperature of -10°C, of 0.385 MPa or more and 0.417 MPa or less, and can be applied to a commercially available refrigerating apparatus for R1234yf without any significant change in design.

The content rate of HFO-1132(E) is further preferably 22.5 to 27.5 mass% and the content rate of HFO-1234yf is further preferably 77.5 to 72.5 mass% based on the total mass of HFO-1132(E) and HFO-1234yf in the refrigerant 2C4. In such a case, the refrigerant 2C4 has various characteristics of a GWP of 100 or less, a COP relative to that of R1234yf of 98% or more, a refrigerating capacity relative to that of R1234yf of 140% or more, lower flammability (Class 2L) according to ASHRAE Standard, a discharge temperature of 64.8°C or less, and a critical temperature of 83.8°C or more. Furthermore, in such a case, the refrigerant 2C4 has a saturation pressure at a saturation temperature of -10°C, of 0.388 MPa or more and 0.414 MPa or less, and can be applied to a commercially available refrigerating apparatus for R1234yf without any significant change in design.

The content rate of HFO-1132(E) is particularly preferably 23.0 to 27.2 mass% and the content rate of HFO-1234yf is particularly preferably 77.0 to 72.8 mass% based on the total mass of HFO-1132(E) and HFO-1234yf in the refrigerant 2C4. In such a case, the refrigerant 2C4 has various characteristics of a GWP of 100 or less, a COP relative to that of R1234yf of 98% or more, a refrigerating capacity relative to that of R1234yf of 141% or more, lower flammability (Class 2L) according to ASHRAE Standard, a discharge temperature of 64.8°C or less, and a critical temperature of 83.8°C or more. Furthermore, in such a case, the refrigerant 2C4 has a saturation pressure at a saturation temperature of -10°C, of 0.390 MPa or more and 0.414 MPa or less, and can be applied to a commercially available refrigerating apparatus for R1234yf without any significant change in design.

The content rate of HFO-1132(E) is extremely preferably 23.5 to 27.0 mass% and the content rate of HFO-1234yf is extremely preferably 76.5 to 73.0 mass% based on the total mass of HFO-1132(E) and HFO-1234yf in the refrigerant 2C4. In such a case, the refrigerant 2C4 has various characteristics of a GWP of 100 or less, a COP relative to that of R1234yf of 98% or more, a refrigerating capacity relative to that of R1234yf of 142% or more, lower flammability (Class 2L) according to ASHRAE Standard, a discharge temperature of 64.8°C or less, and a critical temperature of 83.8°C or more. Furthermore, in such a case, the refrigerant 2C4 has a saturation pressure at a saturation temperature of -10°C, of 0.390 MPa or more and 0.414 MPa or less, and can be applied to a commercially available refrigerating apparatus for R1234yf without any significant change in design.

The content rate of HFO-1132(E) is most preferably 24.0 to 26.7 mass% and the content rate of HFO-1234yf is most preferably 76.0 to 73.3 mass% based on the total mass of HFO-1132(E) and HFO-1234yf in the refrigerant 2C4. In such a case, the refrigerant 2C4 has various characteristics of a GWP of 100 or less, a COP relative to that of R1234yf of 98% or more, a refrigerating capacity relative to that of R1234yf of 144% or more, lower flammability (Class 2L) according to ASHRAE Standard, a discharge temperature of 64.6°C or less, and a critical temperature of 84.0°C or more. Furthermore, in such a case, the refrigerant 2C4 has a saturation pressure at a saturation temperature of -10°C, of 0.396 MPa or more and 0.411 MPa or less, and can be applied to a commercially available refrigerating apparatus for R1234yf without any significant change in design.

The refrigerant 2C4 usually has a saturation pressure at a saturation temperature of -10°C, of 0.420 MPa or less, preferably 0.418 MPa or less, more preferably 0.417 MPa or less, further preferably 0.415 MPa or less, particularly preferably 0.413 MPa or less. Such a range enables the refrigerant 2C4 to be applied to a commercially available refrigerating apparatus for R1234yf without any significant change in design.

The refrigerant 2C4 usually has a saturation pressure at a saturation temperature of -10°C, of 0.380 MPa or more, preferably 0.385 MPa or more, more preferably 0.390 MPa or more, further preferably 0.400 MPa or more, particularly preferably 0.410 MPa or more. In such a case, the refrigerant 2C4 can be applied to a commercially available refrigerating apparatus for R1234yf without any significant change in design.

In a case where the refrigerant 2C4 is used for operating the refrigeration cycle, in the present disclosure, the discharge temperature is preferably 65°C or less, more preferably 64.8°C or less, further preferably 64.7°C or less, particularly preferably 64.5°C or less from the viewpoint that the life of any member of a commercially available refrigerating apparatus for R1234yf is extended.

The refrigerant 2C4 is preferably used for operating a refrigeration cycle at an evaporating temperature of -75 to 5°C in the present disclosure, from the viewpoint that a refrigerating capacity relative to that of R1234yf of 140% or more is obtained.

The evaporating temperature in the refrigeration cycle where the refrigerant 2C4 of the present disclosure is used is preferably 5°C or less, more preferably 0°C or less, further preferably -5°C or less, particularly preferably -10°C or less, from the viewpoint that a refrigerating capacity relative to that of R1234yf of 140% or more is obtained.

The evaporating temperature in the refrigeration cycle where the refrigerant 2C4 of the present disclosure is used is preferably -75°C or more, more preferably -60°C or more, further preferably -55°C or more, particularly preferably -50°C or more, from the viewpoint that a refrigerating capacity relative to that of R1234yf of 140% or more is obtained.

The evaporating temperature in the refrigeration cycle where the refrigerant 2C4 of the present disclosure is used is preferably -65°C or more and 0°C or less, more preferably -60°C or more and -5°C or less, further preferably -55°C or more and -7.5°C or less, particularly preferably -50°C or more and -10°C or less, from the viewpoint that a refrigerating capacity relative to that of R1234yf of 140% or more is obtained.

The discharge temperature in the refrigeration cycle where the refrigerant 2C4 of the present disclosure is used is preferably 65.0°C or less, more preferably 64.9°C or less, further preferably 64.8°C or less, particularly preferably 64.7°C or less, from the viewpoint that the life of any member of a commercially available refrigerating apparatus for R1234yf is extended.

In a case where the refrigerant 2C4 is used for operating the refrigeration cycle, in the present disclosure, a process of liquefaction (condensation) of the refrigerant is required in the refrigeration cycle, and thus the critical temperature is required to be remarkably higher than the temperature of cooling water or cooling air for liquefying the refrigerant. The critical temperature in the refrigeration cycle where the refrigerant 2C4 of the present disclosure is used is preferably 83.5°C or more, more preferably 83.8°C or more, further preferably 84.0°C or more, particularly preferably 84.5°C or more, from such a viewpoint.

The refrigerant 2C4 can further include other refrigerant, in addition to HFO-1132(E) and HFO-1234yf, as long as the above characteristics are not impaired. In such a case, the content rate of such other refrigerant in the entire refrigerant 2C4 is preferably 0.5 mass% or less, more preferably 0.3 mass% or less, further preferably 0.2 mass% or less, particularly preferably 0.1 mass% or less. Such other refrigerant is not limited, and can be selected from a wide range of known refrigerants widely used in the art. Such other refrigerant may be included singly or in combinations of two or more kinds thereof in the refrigerant 2C4.

The refrigerant 2C4 particularly preferably consists only of HFO-1132(E) and HFO-1234yf. In other words, the refrigerant 2C4 particularly preferably includes HFO-1132(E) and HFO-1234yf at a total concentration of 100 mass% in the entire refrigerant 2C4.

In a case where the refrigerant 2C4 consists only of HFO-1132(E) and HFO-1234yf, the content rate of HFO-1132(E) is usually 21.0 to 28.4 mass% and the content rate of HFO-1234yf is usually 79.0 to 71.6 mass% based on the total mass of HFO-1132(E) and HFO-1234yf. The refrigerant 2C4, which has such a configuration, thus has various characteristics of (1) a sufficiently low GWP (100 or less), (2) a COP comparable with that of R1234yf and (3) a refrigerating capacity relative to that of R1234yf of 140% or more, and (4) lower flammability (Class 2L) according to ASHRAE Standard. Furthermore, in such a case, the refrigerant 2C4 has a saturation pressure at a saturation temperature of -10°C, of 0.380 MPa or more and 0.420 MPa or less, and can be applied to a commercially available refrigerating apparatus for R1234yf without any significant change in design.

In a case where the refrigerant 2C4 consists only of HFO-1132(E) and HFO-1234yf, the content rate of HFO-1132(E) is preferably 21.5 to 28.0 mass% and the content rate of HFO-1234yf is preferably 78.5 to 72.0 mass% based on the total mass of HFO-1132 (E) and HFO-1234yf. In such a case, the refrigerant 2C4 has various characteristics of a GWP of 100 or less, a COP relative to that of R1234yf of 98% or more, a refrigerating capacity relative to that of R1234yf of 140% or more, lower flammability (Class 2L) according to ASHRAE Standard, a discharge temperature of 65.0°C or less, and a critical temperature of 83.5°C or more. Furthermore, in such a case, the refrigerant 2C4 has a saturation pressure at a saturation temperature of -10°C, of 0.383 MPa or more and 0.418 MPa or less, and can be applied to a commercially available refrigerating apparatus for R1234yf without any significant change in design.

In a case where the refrigerant 2C4 consists only of HFO-1132(E) and HFO-1234yf, the content rate of HFO-1132(E) is more preferably 22.0 to 27.7 mass% and the content rate of HFO-1234yf is more preferably 78.0 to 72.3 mass% based on the total mass of HFO-1132(E) and HFO-1234yf. In such a case, the refrigerant 2C4 has various characteristics of a GWP of 100 or less, a COP relative to that of R1234yf of 98% or more, a refrigerating capacity relative to that of R1234yf of 140% or more, lower flammability (Class 2L) according to ASHRAE Standard, a discharge temperature of 65.0°C or less, and a critical temperature of 83.5°C or more. Furthermore, in such a case, the refrigerant 2C4 has a saturation pressure at a saturation temperature of -10°C, of 0.385 MPa or more and 0.417 MPa or less, and can be applied to a commercially available refrigerating apparatus for R1234yf without any significant change in design.

In a case where the refrigerant 2C4 consists only of HFO-1132(E) and HFO-1234yf, the content rate of HFO-1132(E) is further preferably 22.5 to 27.5 mass% and the content rate of HFO-1234yf is further preferably 77.5 to 72.5 mass% based on the total mass of HFO-1132(E) and HFO-1234yf. In such a case, the refrigerant 2C4 has various characteristics of a GWP of 100 or less, a COP relative to that of R1234yf of 98% or more, a refrigerating capacity relative to that of R1234yf of 140% or more, lower flammability (Class 2L) according to ASHRAE Standard, a discharge temperature of 64.8°C or less, and a critical temperature of 83.8°C or more. Furthermore, in such a case, the refrigerant 2C4 has a saturation pressure at a saturation temperature of -10°C, of 0.388 MPa or more and 0.414 MPa or less, and can be applied to a commercially available refrigerating apparatus for R1234yf without any significant change in design.

In a case where the refrigerant 2C4 consists only of HFO-1132(E) and HFO-1234yf, the content rate of HFO-1132(E) is particularly preferably 23.0 to 27.2 mass% and the content rate of HFO-1234yf is particularly preferably 77.0 to 72.8 mass% based on the total mass of HFO-1132(E) and HFO-1234yf. In such a case, the refrigerant 2C4 has various characteristics of a GWP of 100 or less, a COP relative to that of R1234yf of 98% or more, a refrigerating capacity relative to that of R1234yf of 141% or more, lower flammability (Class 2L) according to ASHRAE Standard, a discharge temperature of 64.8°C or less, and a critical temperature of 83.8°C or more. Furthermore, in such a case, the refrigerant 2C4 has a saturation pressure at a saturation temperature of -10°C, of 0.390 MPa or more and 0.414 MPa or less, and can be applied to a commercially available refrigerating apparatus for R1234yf without any significant change in design.

In a case where the refrigerant 2C4 consists only of HFO-1132(E) and HFO-1234yf, the content rate of HFO-1132(E) is extremely preferably 23.5 to 27.0 mass% and the content rate of HFO-1234yf is extremely preferably 76.5 to 73.0 mass% based on the total mass of HFO-1132(E) and HFO-1234yf. In such a case, the refrigerant 2C4 has various characteristics of a GWP of 100 or less, a COP relative to that of R1234yf of 98% or more, a refrigerating capacity relative to that of R1234yf of 142% or more, lower flammability (Class 2L) according to ASHRAE Standard, a discharge temperature of 64.8°C or less, and a critical temperature of 83.8°C or more. Furthermore, in such a case, the refrigerant 2C4 has a saturation pressure at a saturation temperature of -10°C, of 0.390 MPa or more and 0.414 MPa or less, and can be applied to a commercially available refrigerating apparatus for R1234yf without any significant change in design.

In a case where the refrigerant 2C4 consists only of HFO-1132(E) and HFO-1234yf, the content rate of HFO-1132(E) is most preferably 24.0 to 26.7 mass% and the content rate of HFO-1234yf is most preferably 76.0 to 73.3 mass% based on the total mass of HFO-1132(E) and HFO-1234yf. In such a case, the refrigerant 2C4 has various characteristics of a GWP of 100 or less, a COP relative to that of R1234yf of 98% or more, a refrigerating capacity relative to that of R1234yf of 144% or more, lower flammability (Class 2L) according to ASHRAE Standard, a discharge temperature of 64.6°C or less, and a critical temperature of 84.0°C or more. Furthermore, in such a case, the refrigerant 2C4 has a saturation pressure at a saturation temperature of -10°C, of 0.396 MPa or more and 0.411 MPa or less, and can be applied to a commercially available refrigerating apparatus for R1234yf without any significant change in design.

### [Examples of refrigerant 2C]

Hereinafter, the refrigerant 2C will be described with reference to Examples in more detail. It is noted that the present disclosure is not limited to such Examples.

### Test Example 4

The GWP of each mixed refrigerant represented in Examples 4-1 to 4-7 and Comparative Examples 4-1 to 4-5 was evaluated based on the value in the fourth report of IPCC.

The COP, the refrigerating capacity, the discharge temperature and the saturation pressure at a saturation temperature of -10°C of such each mixed refrigerant were determined by performing theoretical refrigeration cycle calculation with respect to such each mixed refrigerant under the following conditions by using National Institute of Science and Technology (NIST) and Reference Fluid Thermodynamic and Transport Properties Database (Refprop 9.0).

| | |
|---|---|
| Evaporating temperature | 5°C |
| Condensation temperature | 45°C |
| Superheating temperature | 5 K |
| Subcooling temperature | 5 K |
| Compressor efficiency | 70% |

An "evaporating temperature of 5°C" means that the evaporating temperature of such each mixed refrigerant in an evaporator included in a refrigerating apparatus is 5°C. A "condensation temperature of 45°C" means that the condensation temperature of such each mixed refrigerant in a condenser included in a refrigerating apparatus is 45°C.

The results in Test Example 4 are shown in Table 228. Table 228 shows Examples and Comparative Examples of the refrigerant 2C4 of the present disclosure. In Table 228, the "COP ratio" and the "Refrigerating capacity ratio" each represent the proportion (%) relative to that of R1234yf. In Table 228, the "Saturation pressure (-10°C)" represents the saturation pressure at a saturation temperature of -10°C, as a representative evaporating temperature value under refrigeration conditions. In Table 228, the "Discharge temperature (°C)" represents the temperature at which the highest temperature in the refrigeration cycle is achieved in theoretical refrigeration cycle calculation with respect to such each mixed refrigerant.

The coefficient of performance (COP) was determined according to the following expression.$COP = \left(Refrigerating capacity or heating capacity\right) / Power consumption$

The critical temperature was determined by performing calculation by using National Institute of Science and Technology (NIST) and Reference Fluid Thermodynamic and Transport Properties Database (Refprop 9.0).

The flammability of such each mixed refrigerant was determined by defining the mixed composition of such each mixed refrigerant as the WCF concentration, and measuring the flame velocity according to ANSI/ASHRAE Standard 34-2013. One having a flame velocity of 0 cm/s to 10 cm/s was rated as "Class 2L (lower flammability)", one having a flame velocity of more than 10 cm/s was rated as "Class 2 (low flammability)", and one causing no flame propagation was rated as "Class 1 (non-flammability)". In Table 228, the "ASHRAE flammability classification" shows each result based on the criteria for determination.

The flame velocity test was performed as follows. First, the mixed refrigerant used had a purity of 99.5% or more, and degassing was made by repeating a cycle of freezing, pumping and thawing until no trace of air was observed on a vacuum gauge. The flame velocity was measured by a closed method. The initial temperature was ambient temperature. Ignition was performed by generating an electric spark between electrodes at the center of a sample cell. The duration of discharge was 1.0 to 9.9 ms, and the ignition energy was typically about 0.1 to 1.0 J. The spread of any flame was visualized using a schlieren photograph. A cylindrical container (inner diameter: 155 mm, length: 198 mm) equipped with two light-transmitting acrylic windows was used as the sample cell, and a xenon lamp was used as a light source. A schlieren image of any flame was recorded by a high-speed digital video camera at a frame rate of 600 fps, and stored in a PC.

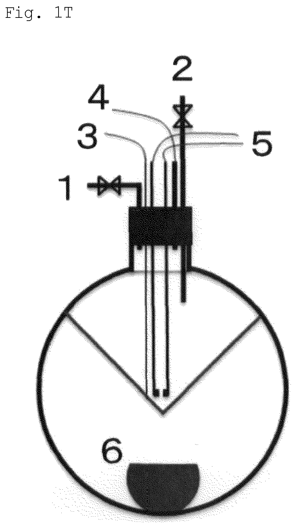

The flammable range of the mixed refrigerant was measured by using a measurement apparatus (see Fig. 1T) based on ASTM E681-09.

Specifically, a spherical glass flask having an internal volume of 12 L was used so that the state of flame could be visually observed, and recorded and imaged, and the glass flask was set so that any gas was released through a lid at the top when an excess pressure was generated due to flame. The ignition method was made by generating ignition due to discharge from an electrode held at a height of 1/3 from the bottom.

### <Test conditions>

Test container: spherical container of 280 mm in diameter (internal volume: 12 L)
Test temperature: 60°C ± 3°C
Pressure: 101.3 kPa±0.7 kPa
Water content: 0.0088 g±0.0005 g per gram of dry air (water content at a relative humidity of 50% at 23°C)
Mixing ratio of refrigerant composition/air: ±0.2 vol.% by 1 vol.% Mixing of refrigerant composition: ±0.1 mass%
Ignition method: AC discharge, voltage 15 kV, current 30 mA, neon transformer
Electrode interval: 6.4 mm (1/4 inches)
Spark: 0.4 seconds±0.05 seconds

### Criteria for determination:

- A case where any flame was spread at more than 90 degrees around the ignition point: flame propagation (flammability)
- A case where any flame was spread at 90 degrees or less around the ignition point: no flame propagation (non-flammability)

**[Table 228]**

| Item | | Unit | Compar ative Exampl e 4-1 | Compar ative Exampl e 4-2 | Exam ple 4-1 | Exam ple 4-2 | Exam ple 4-3 | Exam ple 4-4 | Exam ple 4-5 | Exam ple 4-6 | Exam ple 4-7 | Compar ative Exampl e 4-3 | Compar ative Exampl e 4-4 | Compar ative Exampl e 4-5 |
|---|---|---|---|---|---|---|---|---|---|---|---|---|---|---|
| Compos ition propor tions | HFO-1132 (E) | mass% | 0 | 15.0 | 21.0 | 23.6 | 24.3 | 25.1 | 26.7 | 27.5 | 28.4 | 30.0 | 40.0 | 50.0 |
| | HFO-1234 yf | mass% | 100.0 | 85.0 | 79.0 | 76.4 | 75.7 | 74.9 | 73.3 | 72.5 | 71.6 | 70.0 | 60.0 | 50.0 |
| GWP (AR4) | | - | 4 | 5 | 5 | 5 | 5 | 6 | 6 | 6 | 6 | 6 | 6 | 7 |
| Discharge temperature | | °C | 54.4 | 61.3 | 63.1 | 63.8 | 64.0 | 64.2 | 64.6 | 64.8 | 65.0 | 65.4 | 67.5 | 69.4 |
| Saturation pressure (-10°C) | | MPa | 0.222 | 0.350 | 0.38 3 | 0.39 6 | 0.40 0 | 0.40 3 | 0.41 1 | 0.41 4 | 0.41 8 | 0.425 | 0.461 | 0.492 |
| Critical temperature | | °C | 94.7 | 88.1 | 85.9 | 85.0 | 84.8 | 84.5 | 84.0 | 83.8 | 83.5 | 83.0 | 80.5 | 78.7 |
| COP ratio (relative to that of R1234yf) | | % | 100.0 | 99.1 | 98.8 | 98.6 | 98.5 | 98.4 | 98.3 | 98.2 | 98.2 | 98.0 | 97.2 | 96.6 |
| Refrigerati ng capacity ratio (relative to that of R1234yf) | | % | 100.0 | 129.8 | 140. 0 | 144. 2 | 145. 4 | 146. 6 | 149. 1 | 150. 3 | 151. 7 | 154.1 | 168.2 | 181.3 |
| ASHRAE flammability classification | | - | Class 2L | Class 2L | Class 2L | Class 2L | Class 2L | Class 2L | Class 2L | Class 2L | Class 2L | Class 2L | Class 2L | Class 2L |

### Test Example 5

The GWP of each mixed refrigerant represented in Examples 5-1 to 5-13, Comparative Examples 5-1 to 5-3 and Reference Example 5-1 (R134a) was evaluated based on the value in the fourth report of IPCC.

The COP, the refrigerating capacity, the boiling point and the discharge temperature of such each mixed refrigerant were determined by performing theoretical refrigeration cycle calculation with respect to such each mixed refrigerant under the following conditions by using National Institute of Science and Technology (NIST) and Reference Fluid Thermodynamic and Transport Properties Database (Refprop 9.0).

| | |
|---|---|
| Evaporating temperature | -30°C |
| Condensation temperature | 30°C |
| Superheating temperature | 5 K |
| Subcooling temperature | 5 K |
| Compressor efficiency | 70% |

An "evaporating temperature of -30°C" means that the evaporating temperature of such each mixed refrigerant in an evaporator included in a refrigerating apparatus is -30°C. A "condensation temperature of 30°C" means that the condensation temperature of such each mixed refrigerant in a condenser included in a refrigerating apparatus is 30°C.

The results in Test Example 5 are shown in Table 229. Table 229 shows Examples and Comparative Examples of the refrigerant 2C5 of the present disclosure. In Table 229, the "COP ratio" and the "Refrigerating capacity ratio" each represent the proportion (%) relative to that of R1234yf. In Table 229, the "Discharge temperature (°C)" represents the temperature at which the highest temperature in the refrigeration cycle is achieved in theoretical refrigeration cycle calculation with respect to such each mixed refrigerant. In Table 229, the "Boiling point (°C)" represents the temperature at which a liquid phase of such each mixed refrigerant is at atmospheric pressure (101.33 kPa). In Table 229, "Power consumption (%) of driving force" represents the electric energy used for traveling an electric car, and is represented by the ratio to the power consumption in the case of HFO-1234yf as the refrigerant. In Table 229, "Heating power consumption (%)" represents the electric energy used for operating heating by an electric car, and is represented by the ratio to the power consumption in the case of HFO-1234yf as the refrigerant. In Table 229, the "Mileage" represents the relative proportion (%) of the mileage in traveling with heating when the mileage in travelling with no heating in an electric car in which a secondary battery having a certain electric capacitance is mounted is 100% (the consumption power in heating is 0).

The coefficient of performance (COP) was determined according to the following expression.
COP=(Refrigerating capacity or heating capacity)/Power consumption

The flammability of such each mixed refrigerant was determined by defining the mixed composition of such each mixed refrigerant as the WCF concentration, and measuring the flame velocity according to ANSI/ASHRAE Standard 34-2013. The flame velocity was measured as follows. First, the mixed refrigerant used had a purity of 99.5% or more, and degassing was made by repeating a cycle of freezing, pumping and thawing until no trace of air was observed on a vacuum gauge. The flame velocity was measured by a closed method. The initial temperature was ambient temperature. Ignition was performed by generating an electric spark between electrodes at the center of a sample cell. The duration of discharge was 1.0 to 9.9 ms, and the ignition energy was typically about 0.1 to 1.0 J. The spread of any flame was visualized using a schlieren photograph. A cylindrical container (inner diameter: 155 mm, length: 198 mm) equipped with two light-transmitting acrylic windows was used as the sample cell, and a xenon lamp was used as a light source. A schlieren image of any flame was recorded by a high-speed digital camera at a frame rate of 600 fps, and stored in a PC.

The heating method included using an electric heater system for heating in the case of any refrigerant having a boiling point of more than -40°C, or using a heat pump system for heating in the case of refrigerant having a boiling point of -40°C or less.

The power consumption in use of heating was determined by the following expression.$Power consumption in use of heating = Heating capacity / Heating COP$

Herein, the heating COP means "heating efficiency".

The heating efficiency means that the heating COP is 1 in the case of an electric heater, and an electrode comparable with a driving force is consumed in heating. In other words, the consumption power in heating is expressed by E=E/(1+COP). On the other hand, the heating COP in the case of a heat pump was determined by performing theoretical refrigeration cycle calculation with respect to such each mixed refrigerant under the following conditions by using National Institute of Science and Technology (NIST) and Reference Fluid Thermodynamic and Transport Properties Database (Refprop 9.0).

| | |
|---|---|
| Evaporating temperature | -30°C |
| Condensation temperature | 30°C |
| Superheating temperature | 5 K |
| Subcooling temperature | 5 K |
| Compressor efficiency | 70% |

The mileage was determined by the following expression. 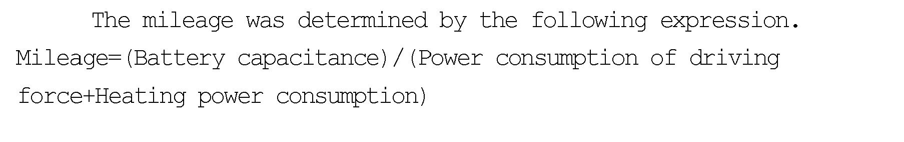 Mileage=(Battery capacitance)/(Power consumption of driving force+Heating power consumption)

**[Table 229]**

| Item | | Unit | Referen ce Example 5-1 | Comparat ive Example 5-1 | Comparat ive Example 5-2 | Examp le 5-1 | Examp le 5-2 | Examp le 5-3 | Examp le 5-4 | Examp le 5-5 | Examp le 5-6 | Examp le 5-7 | Examp le 5-8 | Examp le 5-9 | Examp le 5-10 | Examp le 5-11 | Examp le 5-12 | Examp le 5-13 | Comparat ive Example 5-3 |
|---|---|---|---|---|---|---|---|---|---|---|---|---|---|---|---|---|---|---|---|
| Composition proportions | HFO-1132 ( E) | mass% | 0.0 | 0 | 10.0 | 12.1 | 15.0 | 20.0 | 25.0 | 30.0 | 35.0 | 40.0 | 45.0 | 50.0 | 55.0 | 60.0 | 65.0 | 72.0 | 75.0 |
| | HFO-1234y f | mass% | 0.0 | 100.0 | 90.0 | 87.9 | 85.0 | 80.0 | 75.0 | 70.0 | 65.0 | 60.0 | 55.0 | 50.0 | 45.0 | 40.0 | 35.0 | 28.0 | 25.0 |
| | HFC-134a | mass % | 100.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| GWP (AR4) | | - | 1430 | 4 | 5 | 5 | 5 | 5 | 6 | 6 | 6 | 6 | 7 | 7 | 7 | 8 | 8 | 8 | 9 |
| COP ratio (relative to that of R1234yf) | | % | 105 | 100 | 100 | 100 | 100 | 100 | 100 | 100 | 100 | 100 | 100 | 100 | 100 | 100 | 100 | 100 | 100 |
| Refrigerating capacity ratio (relative to that of R1234yf) | | % | 99 | 100 | 123 | 128 | 134 | 145 | 155 | 165 | 175 | 185 | 194 | 203 | 212 | 220 | 229 | 240 | 245 |
| Power consumption of driving force | | % | 100 | 100 | 100 | 100 | 100 | 100 | 100 | 100 | 100 | 100 | 100 | 100 | 100 | 100 | 100 | 100 | 100 |
| Heating power consumption | | % | 95 | 100 | 100 | 33 | 33 | 33 | 33 | 33 | 33 | 33 | 33 | 33 | 33 | 33 | 33 | 33 | 33 |
| Mileage (without heating) | | % | 100 | 100 | 100 | 100 | 100 | 100 | 100 | 100 | 100 | 100 | 100 | 100 | 100 | 100 | 100 | 100 | 100 |
| Mileage (with heating) | | % | 50 | 50 | 50 | 84 | 84 | 84 | 84 | 84 | 84 | 84 | 84 | 84 | 84 | 84 | 84 | 84 | 84 |
| Discharge temperature | | °C | 66.0 | 48.0 | 54.8 | 56.0 | 57.5 | 59.8 | 61.9 | 63.9 | 65.8 | 67.6 | 69.3 | 70.9 | 72.6 | 74.2 | 75.9 | 78.2 | 79.2 |

| Flame velocity | | cm/s | 0.0 | 1.5 | 1.5 | 1.5 | 1.5 | 1.5 | 1.5 | 1.5 | 2.0 | 2.6 | 3.4 | 4.3 | 5.3 | 6.5 | 7.8 | 9.9 | 10.9 |
|---|---|---|---|---|---|---|---|---|---|---|---|---|---|---|---|---|---|---|---|
| Boiling point | | °C | -26.1 | -29.5 | -38.8 | -40.0 | -41.4 | -43.3 | -44.7 | -45.9 | -46.9 | -47.7 | -48.4 | -49.1 | -49.6 | -50.2 | -50.5 | -51.2 | -51.4 |
| Saturation pressure at - 40°C | | kPaG | -50.1 | -39 | -4.4 | 0.9 | 7.5 | 17.2 | 25.3 | 32.3 | 38.4 | 43.9 | 48.8 | 53.4 | 57.5 | 61.4 | 65.0 | 69.6 | 71.5 |
| Heating method | | System | Electric heater | Electric heater | Electric heater | Heat pump | Heat pump | Heat pump | Heat pump | Heat pump | Heat pump | Heat pump | Heat pump | Heat pump | Heat pump | Heat pump | Heat pump | Heat pump | Heat pump |

### (2) Refrigerating oil

A refrigerating oil as technique of second group can improve the lubricity in the refrigeration cycle apparatus and can also achieve efficient cycle performance by performing a refrigeration cycle such as a refrigeration cycle together with a refrigerant composition.

Examples of the refrigerating oil include oxygen-containing synthetic oils (e.g., ester-type refrigerating oils and ether-type refrigerating oils) and hydrocarbon refrigerating oils. In particular, ester-type refrigerating oils and ether-type refrigerating oils are preferred from the viewpoint of miscibility with refrigerants or refrigerant compositions. The refrigerating oils may be used alone or in combination of two or more.

The kinematic viscosity of the refrigerating oil at 40°C is preferably 1 mm²/s or more and 750 mm²/s or less and more preferably 1 mm²/s or more and 400 mm²/s or less from at least one of the viewpoints of suppressing the deterioration of the lubricity and the hermeticity of compressors, achieving sufficient miscibility with refrigerants under low-temperature conditions, suppressing the lubrication failure of compressors, and improving the heat exchange efficiency of evaporators. Herein, the kinematic viscosity of the refrigerating oil at 100°C may be, for example, 1 mm²/s or more and 100 mm²/s or less and is more preferably 1 mm²/s or more and 50 mm²/s or less.

The refrigerating oil preferably has an aniline point of - 100°C or higher and 0°C or lower. The term "aniline point" herein refers to a numerical value indicating the solubility of, for example, a hydrocarbon solvent, that is, refers to a temperature at which when equal volumes of a sample (herein, refrigerating oil) and aniline are mixed with each other and cooled, turbidity appears because of their immiscibility (provided in JIS K 2256). Note that this value is a value of the refrigerating oil itself in a state in which the refrigerant is not dissolved. By using a refrigerating oil having such an aniline point, for example, even when bearings constituting resin functional components and insulating materials for electric motors are used at positions in contact with the refrigerating oil, the suitability of the refrigerating oil for the resin functional components can be improved. Specifically, if the aniline point is excessively low, the refrigerating oil readily infiltrates the bearings and the insulating materials, and thus the bearings and the like tend to swell. On the other hand, if the aniline point is excessively high, the refrigerating oil does not readily infiltrate the bearings and the insulating materials, and thus the bearings and the like tend to shrink. Accordingly, the deformation of the bearings and the insulating materials due to swelling or shrinking can be prevented by using the refrigerating oil having an aniline point within the above-described predetermined range (-100°C or higher and 0°C or lower). If the bearings deform through swelling, the desired length of a gap at a sliding portion cannot be maintained. This may result in an increase in sliding resistance. If the bearings deform through shrinking, the hardness of the bearings increases, and consequently the bearings may be broken because of vibration of a compressor. In other words, the deformation of the bearings through shrinking may decrease the rigidity of the sliding portion. Furthermore, if the insulating materials (e.g., insulating coating materials and insulating films) of electric motors deform through swelling, the insulating properties of the insulating materials deteriorate. If the insulating materials deform through shrinking, the insulating materials may also be broken as in the case of the bearings, which also deteriorates the insulating properties. In contrast, when the refrigerating oil having an aniline point within the predetermined range is used as described above, the deformation of bearings and insulating materials due to swelling or shrinking can be suppressed, and thus such a problem can be avoided.

The refrigerating oil is used as a working fluid for a refrigerating machine by being mixed with a refrigerant composition. The content of the refrigerating oil relative to the whole amount of working fluid for a refrigerating machine is preferably 5 mass% or more and 60 mass% or less and more preferably 10 mass% or more and 50 mass% or less.

### (2-1) Oxygen-containing synthetic oil

An ester-type refrigerating oil or an ether-type refrigerating oil serving as an oxygen-containing synthetic oil is mainly constituted by carbon atoms and oxygen atoms. In the ester-type refrigerating oil or the ether-type refrigerating oil, an excessively low ratio (carbon/oxygen molar ratio) of carbon atoms to oxygen atoms increases the hygroscopicity, and an excessively high ratio of carbon atoms to oxygen atoms deteriorates the miscibility with a refrigerant. Therefore, the molar ratio is preferably 2 or more and 7.5 or less.

### (2-1-1) Ester-type refrigerating oil

Examples of base oil components of the ester-type refrigerating oil include dibasic acid ester oils of a dibasic acid and a monohydric alcohol, polyol ester oils of a polyol and a fatty acid, complex ester oils of a polyol, a polybasic acid, and a monohydric alcohol (or a fatty acid), and polyol carbonate oils from the viewpoint of chemical stability.

### (Dibasic acid ester oil)

The dibasic acid ester oil is preferably an ester of a dibasic acid such as oxalic acid, malonic acid, succinic acid, glutaric acid, adipic acid, pimelic acid, suberic acid, azelaic acid, sebacic acid, phthalic acid, isophthalic acid, or terephthalic acid, in particular, a dibasic acid having 5 to 10 carbon atoms (e.g., glutaric acid, adipic acid, pimelic acid, suberic acid, azelaic acid, or sebacic acid) and a monohydric alcohol having a linear or branched alkyl group and having 1 to 15 carbon atoms (e.g., methanol, ethanol, propanol, butanol, pentanol, hexanol, heptanol, octanol, nonanol, decanol, undecanol, dodecanol, tridecanol, tetradecanol, or pentadecanol). Specific examples of the dibasic acid ester oil include ditridecyl glutarate, di(2-ethylhexyl) adipate, diisodecyl adipate, ditridecyl adipate, and di(3-ethylhexyl) sebacate.

### (Polyol ester oil)

The polyol ester oil is an ester synthesized from a polyhydric alcohol and a fatty acid (carboxylic acid), and has a carbon/oxygen molar ratio of 2 or more and 7.5 or less, preferably 3.2 or more and 5.8 or less.

The polyhydric alcohol constituting the polyol ester oil is a diol (e.g., ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, or 1,12-dodecanediol) or a polyol having 3 to 20 hydroxyl groups (trimethylolethane, trimethylolpropane, trimethylolbutane, di-(trimethylolpropane), tri-(trimethylolpropane), pentaerythritol, di-(pentaerythritol), tri-(pentaerythritol), glycerol, polyglycerol (glycerol dimer or trimer), 1,3,5-pentanetriol, sorbitol, sorbitan, a sorbitol-glycerol condensate, a polyhydric alcohol such as adonitol, arabitol, xylitol, or mannitol, a saccharide such as xylose, arabinose, ribose, rhamnose, glucose, fructose, galactose, mannose, sorbose, cellobiose, maltose, isomaltose, trehalose, sucrose, raffinose, gentianose, or melezitose, or a partially etherified product of the foregoing). One or two or more polyhydric alcohols may constitute an ester.

For the fatty acid constituting the polyol ester, the number of carbon atoms is not limited, but is normally 1 to 24. A linear fatty acid or a branched fatty acid is preferred. Examples of the linear fatty acid include acetic acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, oleic acid, linoleic acid, and linolenic acid. The hydrocarbon group that bonds to a carboxy group may have only a saturated hydrocarbon or may have an unsaturated hydrocarbon. Examples of the branched fatty acid include 2-methylpropionic acid, 2-methylbutanoic acid, 3-methylbutanoic acid, 2,2-dimethylpropionic acid, 2-methylpentanoic acid, 3-methylpentanoic acid, 4-methylpentanoic acid, 2,2-dimethylbutanoic acid, 2,3-dimethylbutanoic acid, 3,3-dimethylbutanoic acid, 2-methylhexanoic acid, 3-methylhexanoic acid, 4-methylhexanoic acid, 5-methylhexanoic acid, 2,2-dimethylpentanoic acid, 2,3-dimethylpentanoic acid, 2,4-dimethylpentanoic acid, 3,3-dimethylpentanoic acid, 3,4-dimethylpentanoic acid, 4,4-dimethylpentanoic acid, 2-ethylpentanoic acid, 3-ethylpentanoic acid, 2,2,3-trimethylbutanoic acid, 2,3,3-trimethylbutanoic acid, 2-ethyl-2-methylbutanoic acid, 2-ethyl-3-methylbutanoic acid, 2-methylheptanoic acid, 3-methylheptanoic acid, 4-methylheptanoic acid, 5-methylheptanoic acid, 6-methylheptanoic acid, 2-ethylhexanoic acid, 3-ethylhexanoic acid, 4-ethylhexanoic acid, 2,2-dimethylhexanoic acid, 2,3-dimethylhexanoic acid, 2,4-dimethylhexanoic acid, 2,5-dimethylhexanoic acid, 3,3-dimethylhexanoic acid, 3,4-dimethylhexanoic acid, 3,5-dimethylhexanoic acid, 4,4-dimethylhexanoic acid, 4,5-dimethylhexanoic acid, 5,5-dimethylhexanoic acid, 2-propylpentanoic acid, 2-methyloctanoic acid, 3-methyloctanoic acid, 4-methyloctanoic acid, 5-methyloctanoic acid, 6-methyloctanoic acid, 7-methyloctanoic acid, 2,2-dimethylheptanoic acid, 2,3-dimethylheptanoic acid, 2,4-dimethylheptanoic acid, 2,5-dimethylheptanoic acid, 2,6-dimethylheptanoic acid, 3,3-dimethylheptanoic acid, 3,4-dimethylheptanoic acid, 3,5-dimethylheptanoic acid, 3,6-dimethylheptanoic acid, 4,4-dimethylheptanoic acid, 4,5-dimethylheptanoic acid, 4,6-dimethylheptanoic acid, 5,5-dimethylheptanoic acid, 5,6-dimethylheptanoic acid, 6,6-dimethylheptanoic acid, 2-methyl-2-ethylhexanoic acid, 2-methyl-3-ethylhexanoic acid, 2-methyl-4-ethylhexanoic acid, 3-methyl-2-ethylhexanoic acid, 3-methyl-3-ethylhexanoic acid, 3-methyl-4-ethylhexanoic acid, 4-methyl-2-ethylhexanoic acid, 4-methyl-3-ethylhexanoic acid, 4-methyl-4-ethylhexanoic acid, 5-methyl-2-ethylhexanoic acid, 5-methyl-3-ethylhexanoic acid, 5-methyl-4-ethylhexanoic acid, 2-ethylheptanoic acid, 3-methyloctanoic acid, 3,5,5-trimethylhexanoic acid, 2-ethyl-2,3,3-trimethylbutyric acid, 2,2,4,4-tetramethylpentanoic acid, 2,2,3,3-tetramethylpentanoic acid, 2,2,3,4-tetramethylpentanoic acid, and 2,2-diisopropylpropanoic acid. One or two or more fatty acids selected from the foregoing may constitute an ester.

One polyhydric alcohol may be used to constitute an ester or a mixture of two or more polyhydric alcohols may be used to constitute an ester. The fatty acid constituting an ester may be a single component, or two or more fatty acids may constitute an ester. The fatty acids may be individual fatty acids of the same type or may be two or more types of fatty acids as a mixture. The polyol ester oil may have a free hydroxyl group.

Specifically, the polyol ester oil is more preferably an ester of a hindered alcohol such as neopentyl glycol, trimethylolethane, trimethylolpropane, trimethylolbutane, di-(trimethylolpropane), tri-(trimethylolpropane), pentaerythritol, di-(pentaerythritol), or tri-(pentaerythritol); further preferably an ester of neopentyl glycol, trimethylolethane, trimethylolpropane, trimethylolbutane, pentaerythritol, or di-(pentaerythritol); and preferably an ester of neopentyl glycol, trimethylolpropane, pentaerythritol, di-(pentaerythritol), or the like and a fatty acid having 2 to 20 carbon atoms.

The fatty acid constituting such a polyhydric alcohol fatty acid ester may be only a fatty acid having a linear alkyl group or may be selected from fatty acids having a branched structure. A mixed ester of linear and branched fatty acids may be employed. Furthermore, two or more fatty acids selected from the above fatty acids may be used to constitute an ester.

Specifically, for example, in the case of a mixed ester of linear and branched fatty acids, the molar ratio of a linear fatty acid having 4 to 6 carbon atoms and a branched fatty acid having 7 to 9 carbon atoms is 15:85 to 90:10, preferably 15:85 to 85:15, more preferably 20:80 to 80:20, further preferably 25:75 to 75:25, and most preferably 30:70 to 70:30. The total content of the linear fatty acid having 4 to 6 carbon atoms and the branched fatty acid having 7 to 9 carbon atoms relative to the whole amount of fatty acid constituting the polyhydric alcohol fatty acid ester is preferably 20 mol% or more. The fatty acid preferably has such a composition that both of sufficient miscibility with a refrigerant and viscosity required as a refrigerating oil are achieved. The content of a fatty acid herein refers to a value relative to the whole amount of fatty acid constituting the polyhydric alcohol fatty acid ester contained in the refrigerating oil.

In particular, the refrigerating oil preferably contains an ester (hereafter referred to as a "polyhydric alcohol fatty acid ester (A)") in which the molar ratio of the fatty acid having 4 to 6 carbon atoms and the branched fatty acid having 7 to 9 carbon atoms is 15:85 to 90:10, the fatty acid having 4 to 6 carbon atoms contains 2-methylpropionic acid, and the total content of the fatty acid having 4 to 6 carbon atoms and the branched fatty acid having 7 to 9 carbon atoms relative to the whole amount of fatty acid constituting the above ester is 20 mol% or more.

The polyhydric alcohol fatty acid ester (A) includes a complete ester in which all hydroxyl groups of a polyhydric alcohol are esterified, a partial ester in which some hydroxyl groups of a polyhydric alcohol are left without being esterified, and a mixture of a complete ester and a partial ester. The hydroxyl value of the polyhydric alcohol fatty acid ester (A) is preferably 10 mgKOH/g or less, more preferably 5 mgKOH/g or less, and most preferably 3 mgKOH/g or less.

For the fatty acid constituting the polyhydric alcohol fatty acid ester (A), the molar ratio of the fatty acid having 4 to 6 carbon atoms and the branched fatty acid having 7 to 9 carbon atoms is 15:85 to 90:10, preferably 15:85 to 85:15, more preferably 20:80 to 80:20, further preferably 25:75 to 75:25, and most preferably 30:70 to 70:30. The total content of the fatty acid having 4 to 6 carbon atoms and the branched fatty acid having 7 to 9 carbon atoms relative to the whole amount of fatty acid constituting the polyhydric alcohol fatty acid ester (A) is 20 mol% or more. In the case where the above conditions for the composition of the fatty acid are not satisfied, if difluoromethane is contained in the refrigerant composition, both of sufficient miscibility with the difluoromethane and viscosity required as a refrigerating oil are not easily achieved at high levels. The content of a fatty acid refers to a value relative to the whole amount of fatty acid constituting the polyhydric alcohol fatty acid ester contained in the refrigerating oil.

Specific examples of the fatty acid having 4 to 6 carbon atoms include butanoic acid, 2-methylpropionic acid, pentanoic acid, 2-methylbutanoic acid, 3-methylbutanoic acid, 2,2-dimethylpropionic acid, 2-methylpentanoic acid, 3-methylpentanoic acid, 4-methylpentanoic acid, 2,2-dimethylbutanoic acid, 2,3-dimethylbutanoic acid, 3,3-dimethylbutanoic acid, and hexanoic acid. Among them, a fatty acid having a branched structure at an alkyl skeleton, such as 2-methylpropionic acid, is preferred.

Specific examples of the branched fatty acid having 7 to 9 carbon atoms include 2-methylhexanoic acid, 3-methylhexanoic acid, 4-methylhexanoic acid, 5-methylhexanoic acid, 2,2-dimethylpentanoic acid, 2,3-dimethylpentanoic acid, 2,4-dimethylpentanoic acid, 3,3-dimethylpentanoic acid, 3,4-dimethylpentanoic acid, 4,4-dimethylpentanoic acid, 2-ethylpentanoic acid, 3-ethylpentanoic acid, 1,1,2-trimethylbutanoic acid, 1,2,2-trimethylbutanoic acid, 1-ethyl-1-methylbutanoic acid, 1-ethyl-2-methylbutanoic acid, octanoic acid, 2-ethylhexanoic acid, 3-ethylhexanoic acid, 3,5-dimethylhexanoic acid, 2,4-dimethylhexanoic acid, 3,4-dimethylhexanoic acid, 4,5-dimethylhexanoic acid, 2,2-dimethylhexanoic acid, 2-methylheptanoic acid, 3-methylheptanoic acid, 4-methylheptanoic acid, 5-methylheptanoic acid, 6-methylheptanoic acid, 2-propylpentanoic acid, nonanoic acid, 2,2-dimethylheptanoic acid, 2-methyloctanoic acid, 2-ethylheptanoic acid, 3-methyloctanoic acid, 3,5,5-trimethylhexanoic acid, 2-ethyl-2,3,3-trimethylbutyric acid, 2,2,4,4-tetramethylpentanoic acid, 2,2,3,3-tetramethylpentanoic acid, 2,2,3,4-tetramethylpentanoic acid, and 2,2-diisopropylpropanoic acid.

The polyhydric alcohol fatty acid ester (A) may contain, as an acid constituent component, a fatty acid other than the fatty acid having 4 to 6 carbon atoms and the branched fatty acid having 7 to 9 carbon atoms as long as the molar ratio of the fatty acid having 4 to 6 carbon atoms and the branched fatty acid having 7 to 9 carbon atoms is 15:85 to 90:10 and the fatty acid having 4 to 6 carbon atoms contains 2-methylpropionic acid.

Specific examples of the fatty acid other than the fatty acid having 4 to 6 carbon atoms and the branched fatty acid having 7 to 9 carbon atoms include fatty acids having 2 or 3 carbon atoms, such as acetic acid and propionic acid; linear fatty acids having 7 to 9 carbon atoms, such as heptanoic acid, octanoic acid, and nonanoic acid; and fatty acids having 10 to 20 carbon atoms, such as decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, and oleic acid.

When the fatty acid having 4 to 6 carbon atoms and the branched fatty acid having 7 to 9 carbon atoms are used in combination with fatty acids other than these fatty acids, the total content of the fatty acid having 4 to 6 carbon atoms and the branched fatty acid having 7 to 9 carbon atoms relative to the whole amount of fatty acid constituting the polyhydric alcohol fatty acid ester (A) is preferably 20 mol% or more, more preferably 25 mol% or more, and further preferably 30 mol% or more. When the content is 20 mol% or more, sufficient miscibility with difluoromethane is achieved in the case where the difluoromethane is contained in the refrigerant composition.

A polyhydric alcohol fatty acid ester (A) containing, as acid constituent components, only 2-methylpropionic acid and 3,5,5-trimethylhexanoic acid is particularly preferred from the viewpoint of achieving both necessary viscosity and miscibility with difluoromethane in the case where the difluoromethane is contained in the refrigerant composition.

The polyhydric alcohol fatty acid ester may be a mixture of two or more esters having different molecular structures. In this case, individual molecules do not necessarily satisfy the above conditions as long as the whole fatty acid constituting a pentaerythritol fatty acid ester contained in the refrigerating oil satisfies the above conditions.

As described above, the polyhydric alcohol fatty acid ester (A) contains the fatty acid having 4 to 6 carbon atoms and the branched fatty acid having 7 to 9 carbon atoms as essential acid components constituting the ester and may optionally contain other fatty acids as constituent components. In other words, the polyhydric alcohol fatty acid ester (A) may contain only two fatty acids as acid constituent components or three or more fatty acids having different structures as acid constituent components, but the polyhydric alcohol fatty acid ester preferably contains, as an acid constituent component, only a fatty acid whose carbon atom (α-position carbon atom) adjacent to carbonyl carbon is not quaternary carbon. If the fatty acid constituting the polyhydric alcohol fatty acid ester contains a fatty acid whose α-position carbon atom is quaternary carbon, the lubricity in the presence of difluoromethane in the case where the difluoromethane is contained in the refrigerant composition tends to be insufficient.

The polyhydric alcohol constituting the polyol ester according to this embodiment is preferably a polyhydric alcohol having 2 to 6 hydroxyl groups.

Specific examples of the dihydric alcohol (diol) include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol. Specific examples of the trihydric or higher alcohol include polyhydric alcohols such as trimethylolethane, trimethylolpropane, trimethylolbutane, di-(trimethylolpropane), tri-(trimethylolpropane), pentaerythritol, di-(pentaerythritol), tri-(pentaerythritol), glycerol, polyglycerol (glycerol dimer or trimer), 1,3,5-pentanetriol, sorbitol, sorbitan, sorbitol glycerol condensates, adonitol, arabitol, xylitol, and mannitol; saccharides such as xylose, arabinose, ribose, rhamnose, glucose, fructose, galactose, mannose, sorbose, and cellobiose; and partially etherified products of the foregoing. Among them, in terms of better hydrolysis stability, an ester of a hindered alcohol such as neopentyl glycol, trimethylolethane, trimethylolpropane, trimethylolbutane, di-(trimethylolpropane), tri-(trimethylolpropane), pentaerythritol, di-(pentaerythritol), or tri-(pentaerythritol) is preferably used; an ester of neopentyl glycol, trimethylolethane, trimethylolpropane, trimethylolbutane, pentaerythritol, or di-(pentaerythritol) is more preferably used; and neopentyl glycol, trimethylolpropane, pentaerythritol, or di-(pentaerythritol) is further preferably used. In terms of excellent miscibility with a refrigerant and excellent hydrolysis stability, a mixed ester of pentaerythritol, di-(pentaerythritol), or pentaerythritol and di-(pentaerythritol) is most preferably used.

Preferred examples of the acid constituent component constituting the polyhydric alcohol fatty acid ester (A) are as follows:
(i) a combination of 1 to 13 acids selected from butanoic acid, 2-methylpropionic acid, pentanoic acid, 2-methylbutanoic acid, 3-methylbutanoic acid, 2,2-dimethylpropionic acid, 2-methylpentanoic acid, 3-methylpentanoic acid, 4-methylpentanoic acid, 2,2-dimethylbutanoic acid, 2,3-dimethylbutanoic acid, 3,3-dimethylbutanoic acid, and hexanoic acid and 1 to 13 acids selected from 2-methylhexanoic acid, 3-methylhexanoic acid, 4-methylhexanoic acid, 5-methylhexanoic acid, 2,2-dimethylpentanoic acid, 2,3-dimethylpentanoic acid, 2,4-dimethylpentanoic acid, 3,3-dimethylpentanoic acid, 3,4-dimethylpentanoic acid, 4,4-dimethylpentanoic acid, 2-ethylpentanoic acid, 3-ethylpentanoic acid, and 2-ethyl-3-methylbutanoic acid;
(ii) a combination of 1 to 13 acids selected from butanoic acid, 2-methylpropionic acid, pentanoic acid, 2-methylbutanoic acid, 3-methylbutanoic acid, 2,2-dimethylpropionic acid, 2-methylpentanoic acid, 3-methylpentanoic acid, 4-methylpentanoic acid, 2,2-dimethylbutanoic acid, 2,3-dimethylbutanoic acid, 3,3-dimethylbutanoic acid, and hexanoic acid and 1 to 25 acids selected from 2-methylheptanoic acid, 3-methylheptanoic acid, 4-methylheptanoic acid, 5-methylheptanoic acid, 6-methylheptanoic acid, 2,2-dimethylhexanoic acid, 3,3-dimethylhexanoic acid, 4,4-dimethylhexanoic acid, 5,5-dimethylhexanoic acid, 2,3-dimethylhexanoic acid, 2,4-dimethylhexanoic acid, 2,5-dimethylhexanoic acid, 3,4-dimethylhexanoic acid, 3,5-dimethylhexanoic acid, 4,5-dimethylhexanoic acid, 2,2,3-trimethylpentanoic acid, 2,3,3-trimethylpentanoic acid, 2,4,4-trimethylpentanoic acid, 3,4,4-trimethylpentanoic acid, 2-ethylhexanoic acid, 3-ethylhexanoic acid, 2-propylpentanoic acid, 2-methyl-2-ethylpentanoic acid, 2-methyl-3-ethylpentanoic acid, and 3-methyl-3-ethylpentanoic acid; and
(iii) a combination of 1 to 13 acids selected from butanoic acid, 2-methylpropionic acid, pentanoic acid, 2-methylbutanoic acid, 3-methylbutanoic acid, 2,2-dimethylpropionic acid, 2-methylpentanoic acid, 3-methylpentanoic acid, 4-methylpentanoic acid, 2,2-dimethylbutanoic acid, 2,3-dimethylbutanoic acid, 3,3-dimethylbutanoic acid, and hexanoic acid and 1 to 50 acids selected from 2-methyloctanoic acid, 3-methyloctanoic acid, 4-methyloctanoic acid, 5-methyloctanoic acid, 6-methyloctanoic acid, 7-methyloctanoic acid, 8-methyloctanoic acid, 2,2-dimethylheptanoic acid, 3,3-dimethylheptanoic acid, 4,4-dimethylheptanoic acid, 5,5-dimethylheptanoic acid, 6,6-dimethylheptanoic acid, 2,3-dimethylheptanoic acid, 2,4-dimethylheptanoic acid, 2,5-dimethylheptanoic acid, 2,6-dimethylheptanoic acid, 3,4-dimethylheptanoic acid, 3,5-dimethylheptanoic acid, 3,6-dimethylheptanoic acid, 4,5-dimethylheptanoic acid, 4,6-dimethylheptanoic acid, 2-ethylheptanoic acid, 3-ethylheptanoic acid, 4-ethylheptanoic acid, 5-ethylheptanoic acid, 2-propylhexanoic acid, 3-propylhexanoic acid, 2-butylpentanoic acid, 2,2,3-trimethylhexanoic acid, 2,2,3-trimethylhexanoic acid, 2,2,4-trimethylhexanoic acid, 2,2,5-trimethylhexanoic acid, 2,3,4-trimethylhexanoic acid, 2,3,5-trimethylhexanoic acid, 3,3,4-trimethylhexanoic acid, 3,3,5-trimethylhexanoic acid, 3,5,5-trimethylhexanoic acid, 4,4,5-trimethylhexanoic acid, 4,5,5-trimethylhexanoic acid, 2,2,3,3-tetramethylpentanoic acid, 2,2,3,4-tetramethylpentanoic acid, 2,2,4,4-tetramethylpentanoic acid, 2,3,4,4-tetramethylpentanoic acid, 3,3,4,4-tetramethylpentanoic acid, 2,2-diethylpentanoic acid, 2,3-diethylpentanoic acid, 3,3-diethylpentanoic acid, 2-ethyl-2,3,3-trimethylbutyric acid, 3-ethyl-2,2,3-trimethylbutyric acid, and 2,2-diisopropylpropionic acid.

Further preferred examples of the acid constituent component constituting the polyhydric alcohol fatty acid ester are as follows:
(i) a combination of 2-methylpropionic acid and 1 to 13 acids selected from 2-methylhexanoic acid, 3-methylhexanoic acid, 4-methylhexanoic acid, 5-methylhexanoic acid, 2,2-dimethylpentanoic acid, 2,3-dimethylpentanoic acid, 2,4-dimethylpentanoic acid, 3,3-dimethylpentanoic acid, 3,4-dimethylpentanoic acid, 4,4-dimethylpentanoic acid, 2-ethylpentanoic acid, 3-ethylpentanoic acid, and 2-ethyl-3-methylbutanoic acid;
(ii) a combination of 2-methylpropionic acid and 1 to 25 acids selected from 2-methylheptanoic acid, 3-methylheptanoic acid, 4-methylheptanoic acid, 5-methylheptanoic acid, 6-methylheptanoic acid, 2,2-dimethylhexanoic acid, 3,3-dimethylhexanoic acid, 4,4-dimethylhexanoic acid, 5,5-dimethylhexanoic acid, 2,3-dimethylhexanoic acid, 2,4-dimethylhexanoic acid, 2,5-dimethylhexanoic acid, 3,4-dimethylhexanoic acid, 3,5-dimethylhexanoic acid, 4,5-dimethylhexanoic acid, 2,2,3-trimethylpentanoic acid, 2,3,3-trimethylpentanoic acid, 2,4,4-trimethylpentanoic acid, 3,4,4-trimethylpentanoic acid, 2-ethylhexanoic acid, 3-ethylhexanoic acid, 2-propylpentanoic acid, 2-methyl-2-ethylpentanoic acid, 2-methyl-3-ethylpentanoic acid, and 3-methyl-3-ethylpentanoic acid; and
(iii) a combination of 2-methylpropionic acid and 1 to 50 acids selected from 2-methyloctanoic acid, 3-methyloctanoic acid, 4-methyloctanoic acid, 5-methyloctanoic acid, 6-methyloctanoic acid, 7-methyloctanoic acid, 8-methyloctanoic acid, 2,2-dimethylheptanoic acid, 3,3-dimethylheptanoic acid, 4,4-dimethylheptanoic acid, 5,5-dimethylheptanoic acid, 6,6-dimethylheptanoic acid, 2,3-dimethylheptanoic acid, 2,4-dimethylheptanoic acid, 2,5-dimethylheptanoic acid, 2,6-dimethylheptanoic acid, 3,4-dimethylheptanoic acid, 3,5-dimethylheptanoic acid, 3,6-dimethylheptanoic acid, 4,5-dimethylheptanoic acid, 4,6-dimethylheptanoic acid, 2-ethylheptanoic acid, 3-ethylheptanoic acid, 4-ethylheptanoic acid, 5-ethylheptanoic acid, 2-propylhexanoic acid, 3-propylhexanoic acid, 2-butylpentanoic acid, 2,2,3-trimethylhexanoic acid, 2,2,3-trimethylhexanoic acid, 2,2,4-trimethylhexanoic acid, 2,2,5-trimethylhexanoic acid, 2,3,4-trimethylhexanoic acid, 2,3,5-trimethylhexanoic acid, 3,3,4-trimethylhexanoic acid, 3,3,5-trimethylhexanoic acid, 3,5,5-trimethylhexanoic acid, 4,4,5-trimethylhexanoic acid, 4,5,5-trimethylhexanoic acid, 2,2,3,3-tetramethylpentanoic acid, 2,2,3,4-tetramethylpentanoic acid, 2,2,4,4-tetramethylpentanoic acid, 2,3,4,4-tetramethylpentanoic acid, 3,3,4,4-tetramethylpentanoic acid, 2,2-diethylpentanoic acid, 2,3-diethylpentanoic acid, 3,3-diethylpentanoic acid, 2-ethyl-2,3,3-trimethylbutyric acid, 3-ethyl-2,2,3-trimethylbutyric acid, and 2,2-diisopropylpropionic acid.

The content of the polyhydric alcohol fatty acid ester (A) is 50 mass% or more, preferably 60 mass% or more, more preferably 70 mass% or more, and further preferably 75 mass% or more relative to the whole amount of the refrigerating oil. The refrigerating oil according to this embodiment may contain a lubricating base oil other than the polyhydric alcohol fatty acid ester (A) and additives as described later. However, if the content of the polyhydric alcohol fatty acid ester (A) is less than 50 mass%, necessary viscosity and miscibility cannot be achieved at high levels.

In the refrigerating oil according to this embodiment, the polyhydric alcohol fatty acid ester (A) is mainly used as a base oil. The base oil of the refrigerating oil according to this embodiment may be a polyhydric alcohol fatty acid ester (A) alone (i.e., the content of the polyhydric alcohol fatty acid ester (A) is 100 mass%). However, in addition to the polyhydric alcohol fatty acid ester (A), a base oil other than the polyhydric alcohol fatty acid ester (A) may be further contained to the degree that the excellent performance of the polyhydric alcohol fatty acid ester (A) is not impaired. Examples of the base oil other than the polyhydric alcohol fatty acid ester (A) include hydrocarbon oils such as mineral oils, olefin polymers, alkyldiphenylalkanes, alkylnaphthalenes, and alkylbenzenes; and esters other than the polyhydric alcohol fatty acid ester (A), such as polyol esters, complex esters, and alicyclic dicarboxylic acid esters, and oxygen-containing synthetic oils (hereafter, may be referred to as "other oxygen-containing synthetic oils") such as polyglycols, polyvinyl ethers, ketones, polyphenyl ethers, silicones, polysiloxanes, and perfluoroethers.

Among them, the oxygen-containing synthetic oil is preferably an ester other than the polyhydric alcohol fatty acid ester (A), a polyglycol, or a polyvinyl ether and particularly preferably a polyol ester other than the polyhydric alcohol fatty acid ester (A). The polyol ester other than the polyhydric alcohol fatty acid ester (A) is an ester of a fatty acid and a polyhydric alcohol such as neopentyl glycol, trimethylolethane, trimethylolpropane, trimethylolbutane, pentaerythritol, or dipentaerythritol and is particularly preferably an ester of neopentyl glycol and a fatty acid, an ester of pentaerythritol and a fatty acid, or an ester of dipentaerythritol and a fatty acid.

The neopentyl glycol ester is preferably an ester of neopentyl glycol and a fatty acid having 5 to 9 carbon atoms. Specific examples of the neopentyl glycol ester include neopentyl glycol di(3,5,5-trimethylhexanoate), neopentyl glycol di(2-ethylhexanoate), neopentyl glycol di(2-methylhexanoate), neopentyl glycol di(2-ethylpentanoate), an ester of neopentyl glycol and 2-methylhexanoic acid·2-ethylpentanoic acid, an ester of neopentyl glycol and 3-methylhexanoic acid·5-methylhexanoic acid, an ester of neopentyl glycol and 2-methylhexanoic acid·2-ethylhexanoic acid, an ester of neopentyl glycol and 3,5-dimethylhexanoic acid·4,5-dimethylhexanoic acid·3,4-dimethylhexanoic acid, neopentyl glycol dipentanoate, neopentyl glycol di(2-ethylbutanoate), neopentyl glycol di(2-methylpentanoate), neopentyl glycol di(2-methylbutanoate), and neopentyl glycol di(3-methylbutanoate).

The pentaerythritol ester is preferably an ester of pentaerythritol and a fatty acid having 5 to 9 carbon atoms. The pentaerythritol ester is, specifically, an ester of pentaerythritol and at least one fatty acid selected from pentanoic acid, 2-methylbutanoic acid, 3-methylbutanoic acid, hexanoic acid, 2-methylpentanoic acid, 2-ethylbutanoic acid, 2-ethylpentanoic acid, 2-methylhexanoic acid, 3,5,5-trimethylhexanoic acid, and 2-ethylhexanoic acid.

The dipentaerythritol ester is preferably an ester of dipentaerythritol and a fatty acid having 5 to 9 carbon atoms. The dipentaerythritol ester is, specifically, an ester of dipentaerythritol and at least one fatty acid selected from pentanoic acid, 2-methylbutanoic acid, 3-methylbutanoic acid, hexanoic acid, 2-methylpentanoic acid, 2-ethylbutanoic acid, 2-ethylpentanoic acid, 2-methylhexanoic acid, 3,5,5-trimethylhexanoic acid, and 2-ethylhexanoic acid.

When the refrigerating oil according to this embodiment contains an oxygen-containing synthetic oil other than the polyhydric alcohol fatty acid ester (A), the content of the oxygen-containing synthetic oil other than the polyhydric alcohol fatty acid ester (A) is not limited as long as excellent lubricity and miscibility of the refrigerating oil according to this embodiment are not impaired. When a polyol ester other than the polyhydric alcohol fatty acid ester (A) is contained, the content of the polyol ester is preferably less than 50 mass%, more preferably 45 mass% or less, still more preferably 40 mass% or less, even more preferably 35 mass% or less, further preferably 30 mass% or less, and most preferably 25 mass% or less relative to the whole amount of the refrigerating oil. When an oxygen-containing synthetic oil other than the polyol ester is contained, the content of the oxygen-containing synthetic oil is preferably less than 50 mass%, more preferably 40 mass% or less, and further preferably 30 mass% or less relative to the whole amount of the refrigerating oil. If the content of the polyol ester other than the pentaerythritol fatty acid ester or the oxygen-containing synthetic oil is excessively high, the above-described effects are not sufficiently produced.

The polyol ester other than the polyhydric alcohol fatty acid ester (A) may be a partial ester in which some hydroxyl groups of a polyhydric alcohol are left without being esterified, a complete ester in which all hydroxyl groups are esterified, or a mixture of a partial ester and a complete ester. The hydroxyl value is preferably 10 mgKOH/g or less, more preferably 5 mgKOH/g or less, and most preferably 3 mgKOH/g or less.

When the refrigerating oil and the working fluid for a refrigerating machine according to this embodiment contain a polyol ester other than the polyhydric alcohol fatty acid ester (A), the polyol ester may contain one polyol ester having a single structure or a mixture of two or more polyol esters having different structures.

The polyol ester other than the polyhydric alcohol fatty acid ester (A) may be any of an ester of one fatty acid and one polyhydric alcohol, an ester of two or more fatty acids and one polyhydric alcohol, an ester of one fatty acid and two or more polyhydric alcohols, and an ester of two or more fatty acids and two or more polyhydric alcohols.

The refrigerating oil according to this embodiment may be constituted by only the polyhydric alcohol fatty acid ester (A) or by the polyhydric alcohol fatty acid ester (A) and other base oils. The refrigerating oil may further contain various additives described later. The working fluid for a refrigerating machine according to this embodiment may also further contain various additives. In the following description, the content of additives is expressed relative to the whole amount of the refrigerating oil, but the content of these components in the working fluid for a refrigerating machine is desirably determined so that the content is within the preferred range described later when expressed relative to the whole amount of the refrigerating oil.

To further improve the abrasion resistance and load resistance of the refrigerating oil and the working fluid for a refrigerating machine according to this embodiment, at least one phosphorus compound selected from the group consisting of phosphoric acid esters, acidic phosphoric acid esters, thiophosphoric acid esters, amine salts of acidic phosphoric acid esters, chlorinated phosphoric acid esters, and phosphorous acid esters can be added. These phosphorus compounds are esters of phosphoric acid or phosphorous acid and alkanol or polyether-type alcohol, or derivatives thereof.

Specific examples of the phosphoric acid ester include tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylenyl phosphate, cresyldiphenyl phosphate, and xylenyldiphenyl phosphate.

Examples of the acidic phosphoric acid ester include monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid phosphate, dihexadecyl acid phosphate, diheptadecyl acid phosphate, dioctadecyl acid phosphate, and dioleyl acid phosphate.

Examples of the thiophosphoric acid ester include tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetradecyl phosphorothionate, tripentadecyl phosphorothionate, trihexadecyl phosphorothionate, triheptadecyl phosphorothionate, trioctadecyl phosphorothionate, trioleyl phosphorothionate, triphenyl phosphorothionate, tricresyl phosphorothionate, trixylenyl phosphorothionate, cresyldiphenyl phosphorothionate, and xylenyldiphenyl phosphorothionate.

The amine salt of an acidic phosphoric acid ester is an amine salt of an acidic phosphoric acid ester and a primary, secondary, or tertiary amine that has a linear or branched alkyl group and that has 1 to 24 carbon atoms, preferably 5 to 18 carbon atoms.

For the amine constituting the amine salt of an acidic phosphoric acid ester, the amine salt is a salt of an amine such as a linear or branched methylamine, ethylamine, propylamine, butylamine, pentylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, oleylamine, tetracosylamine, dimethylamine, diethylamine, dipropylamine, dibutylamine, dipentylamine, dihexylamine, diheptylamine, dioctylamine, dinonylamine, didecylamine, diundecylamine, didodecylamine, ditridecylamine, ditetradecylamine, dipentadecylamine, dihexadecylamine, diheptadecylamine, dioctadecylamine, dioleylamine, ditetracosylamine, trimethylamine, triethylamine, tripropylamine, tributylamine, tripentylamine, trihexylamine, triheptylamine, trioctylamine, trinonylamine, tridecylamine, triundecylamine, tridodecylamine, tritridecylamine, tritetradecylamine, tripentadecylamine, trihexadecylamine, triheptadecylamine, trioctadecylamine, trioleylamine, or tritetracosylamine. The amine may be a single compound or a mixture of two or more compounds.

Examples of the chlorinated phosphoric acid ester include tris(dichloropropyl) phosphate, tris(chloroethyl) phosphate, tris(chlorophenyl) phosphate, and polyoxyalkylene·bis[di(chloroaklyl)] phosphate. Examples of the phosphorous acid ester include dibutyl phosphite, dipentyl phosphite, dihexyl phosphite, diheptyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, trioleyl phosphite, triphenyl phosphite, and tricresyl phosphite. Mixtures of these compounds can also be used.

When the refrigerating oil and the working fluid for a refrigerating machine according to this embodiment contain the above-described phosphorus compound, the content of the phosphorus compound is not limited, but is preferably 0.01 to 5.0 mass% and more preferably 0.02 to 3.0 mass% relative to the whole amount of the refrigerating oil (relative to the total amount of the base oil and all the additives). The above-described phosphorus compounds may be used alone or in combination of two or more.

The refrigerating oil and the working fluid for a refrigerating machine according to this embodiment may contain a terpene compound to further improve the thermal and chemical stability. The "terpene compound" in the present invention refers to a compound obtained by polymerizing isoprene and a derivative thereof, and a dimer to an octamer of isoprene are preferably used. Specific examples of the terpene compound include monoterpenes such as geraniol, nerol, linalool, citral (including geranial), citronellol, menthol, limonene, terpinerol, carvone, ionone, thujone, camphor, and borneol; sesquiterpenes such as farnesene, farnesol, nerolidol, juvenile hormone, humulene, caryophyllene, elemene, cadinol, cadinene, and tutin; diterpenes such as geranylgeraniol, phytol, abietic acid, pimaragen, daphnetoxin, taxol, and pimaric acid; sesterterpenes such as geranylfarnesene; triterpenes such as squalene, limonin, camelliagenin, hopane, and lanosterol; and tetraterpenes such as carotenoid.

Among these terpene compounds, the terpene compound is preferably monoterpene, sesquiterpene, or diterpene, more preferably sesquiterpene, and particularly preferably α-farnesene (3,7,11-trimethyldodeca-1,3,6,10-tetraene) and/or β-farnesene (7,11-dimethyl-3-methylidenedodeca-1,6,10-triene). In the present invention, the terpene compounds may be used alone or in combination of two or more.

The content of the terpene compound in the refrigerating oil according to this embodiment is not limited, but is preferably 0.001 to 10 mass%, more preferably 0.01 to 5 mass%, and further preferably 0.05 to 3 mass% relative to the whole amount of the refrigerating oil. If the content of the terpene compound is less than 0.001 mass%, an effect of improving the thermal and chemical stability tends to be insufficient. If the content is more than 10 mass%, the lubricity tends to be insufficient. The content of the terpene compound in the working fluid for a refrigerating machine according to this embodiment is desirably determined so that the content is within the above preferred range when expressed relative to the whole amount of the refrigerating oil.

The refrigerating oil and the working fluid for a refrigerating machine according to this embodiment may contain at least one epoxy compound selected from phenyl glycidyl ether-type epoxy compounds, alkyl glycidyl ether-type epoxy compounds, glycidyl ester-type epoxy compounds, allyloxirane compounds, alkyloxirane compounds, alicyclic epoxy compounds, epoxidized fatty acid monoesters, and epoxidized vegetable oils to further improve the thermal and chemical stability.

Specific examples of the phenyl glycidyl ether-type epoxy compound include phenyl glycidyl ether and alkylphenyl glycidyl ethers. The alkylphenyl glycidyl ether herein is an alkylphenyl glycidyl ether having 1 to 3 alkyl groups with 1 to 13 carbon atoms. In particular, the alkylphenyl glycidyl ether is preferably an alkylphenyl glycidyl ether having one alkyl group with 4 to 10 carbon atoms, such as n-butylphenyl glycidyl ether, i-butylphenyl glycidyl ether, sec-butylphenyl glycidyl ether, tert-butylphenyl glycidyl ether, pentylphenyl glycidyl ether, hexylphenyl glycidyl ether, heptylphenyl glycidyl ether, octylphenyl glycidyl ether, nonylphenyl glycidyl ether, or decylphenyl glycidyl ether.

Specific examples of the alkyl glycidyl ether-type epoxy compound include decyl glycidyl ether, undecyl glycidyl ether, dodecyl glycidyl ether, tridecyl glycidyl ether, tetradecyl glycidyl ether, 2-ethylhexyl glycidyl ether, neopentyl glycol diglycidyl ether, trimethylolpropane triglycidyl ether, pentaerythritol tetraglycidyl ether, 1,6-hexanediol diglycidyl ether, sorbitol polyglycidyl ether, polyalkylene glycol monoglycidyl ether, and polyalkylene glycol diglycidyl ether.

Specific examples of the glycidyl ester-type epoxy compound include phenyl glycidyl ester, alkyl glycidyl esters, and alkenyl glycidyl esters. Preferred examples of the glycidyl ester-type epoxy compound include glycidyl-2,2-dimethyloctanoate, glycidyl benzoate, glycidyl acrylate, and glycidyl methacrylate.

Specific examples of the allyloxirane compound include 1,2-epoxystyrene and alkyl-1,2-epoxystyrenes.

Specific examples of the alkyloxirane compound include 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,1,2-epoxyoctadecane, 2-epoxynonadecane, and 1,2-epoxyeicosane.

Specific examples of the alicyclic epoxy compound include 1,2-epoxycyclohexane, 1,2-epoxycyclopentane, 3,4-epoxycyclohexylmethyl-3,4-epoxycyclohexane carboxylate, bis(3,4-epoxycyclohexylmethyl) adipate, exo-2,3-epoxynorbornane, bis(3,4-epoxy-6-methylcyclohexylmethyl) adipate, 2-(7-oxabicyclo[4.1.0]hept-3-yl)-spiro(1,3-dioxane-5,3'-[7]oxabicyclo[4.1.0]heptane, 4-(1'-methylepoxyethyl)-1,2-epoxy-2-methylcyclohexane, and 4-epoxyethyl-1,2-epoxycyclohexane.

Specific examples of the epoxidized fatty acid monoester include esters of an epoxidized fatty acid having 12 to 20 carbon atoms and an alcohol having 1 to 8 carbon atoms, phenol, or an alkylphenol. In particular, butyl, hexyl, benzyl, cyclohexyl, methoxyethyl, octyl, phenyl, and butyl phenyl esters of epoxystearic acid are preferably used.

Specific examples of the epoxidized vegetable oil include epoxy compounds of vegetable oils such as soybean oil, linseed oil, and cottonseed oil.

Among these epoxy compounds, phenyl glycidyl ether-type epoxy compounds, alkyl glycidyl ether-type epoxy compounds, glycidyl ester-type epoxy compounds, and alicyclic epoxy compounds are preferred.

When the refrigerating oil and the working fluid for a refrigerating machine according to this embodiment contain the above-described epoxy compound, the content of the epoxy compound is not limited, but is preferably 0.01 to 5.0 mass% and more preferably 0.1 to 3.0 mass% relative to the whole amount of the refrigerating oil. The above-described epoxy compounds may be used alone or in combination of two or more.

The kinematic viscosity of the refrigerating oil containing the polyhydric alcohol fatty acid ester (A) at 40°C is preferably 20 to 80 mm²/s, more preferably 25 to 75 mm²/s, and most preferably 30 to 70 mm²/s. The kinematic viscosity at 100°C is preferably 2 to 20 mm²/s and more preferably 3 to 10 mm²/s. When the kinematic viscosity is more than or equal to the lower limit, the viscosity required as a refrigerating oil is easily achieved. On the other hand, when the kinematic viscosity is less than or equal to the upper limit, sufficient miscibility with difluoromethane in the case where the difluoromethane is contained as a refrigerant composition can be achieved.

The volume resistivity of the refrigerating oil containing the polyhydric alcohol fatty acid ester (A) is not limited, but is preferably 1.0 × 10¹² Ω·cm or more, more preferably 1.0 × 10¹² Ω·cm or more, and most preferably 1.0 × 10¹⁴ Ω·cm or more. In particular, when the refrigerating oil is used for sealed refrigerating machines, high electric insulation tends to be required. The volume resistivity refers to a value measured at 25°C in conformity with JIS C 2101 "Testing methods of electrical insulating oils".

The water content of the refrigerating oil containing the polyhydric alcohol fatty acid ester (A) is not limited, but is preferably 200 ppm or less, more preferably 100 ppm or less, and most preferably 50 ppm or less relative to the whole amount of the refrigerating oil. In particular, when the refrigerating oil is used for sealed refrigerating machines, the water content needs to be low from the viewpoints of the thermal and chemical stability of the refrigerating oil and the influence on electric insulation.

The acid number of the refrigerating oil containing the polyhydric alcohol fatty acid ester (A) is not limited, but is preferably 0.1 mgKOH/g or less and more preferably 0.05 mgKOH/g or less to prevent corrosion of metals used for refrigerating machines or pipes. In the present invention, the acid number refers to an acid number measured in conformity with JIS K 2501 "Petroleum products and lubricants - Determination of neutralization number".

The ash content of the refrigerating oil containing the polyhydric alcohol fatty acid ester (A) is not limited, but is preferably 100 ppm or less and more preferably 50 ppm or less to improve the thermal and chemical stability of the refrigerating oil and suppress the generation of sludge and the like. The ash content refers to an ash content measured in conformity with JIS K 2272 "Crude oil and petroleum products - Determination of ash and sulfated ash".

### (Complex ester oil)

The complex ester oil is an ester of a fatty acid and a dibasic acid, and a monohydric alcohol and a polyol. The above-described fatty acid, dibasic acid, monohydric alcohol, and polyol can be used.

Examples of the fatty acid include the fatty acids mentioned in the polyol ester.

Examples of the dibasic acid include oxalic acid, malonic acid, succinic acid, glutaric acid, adipic acid, pimelic acid, suberic acid, azelaic acid, sebacic acid, phthalic acid, isophthalic acid, and terephthalic acid.

Examples of the polyol include the polyhydric alcohols in the polyol ester. The complex ester is an ester of such a fatty acid, dibasic acid, and polyol, each of which may be constituted by a single component or a plurality of components.

### (Polyol carbonate oil)

The polyol carbonate oil is an ester of a carbonic acid and a polyol.

Examples of the polyol include the above-described diols and polyols.

The polyol carbonate oil may be a ring-opened polymer of a cyclic alkylene carbonate.

### (2-1-2) Ether-type refrigerating oil

The ether-type refrigerating oil is, for example, a polyvinyl ether oil or a polyoxyalkylene oil.

### (Polyvinyl ether oil)

Examples of the polyvinyl ether oil include polymers of a vinyl ether monomer, copolymers of a vinyl ether monomer and a hydrocarbon monomer having an olefinic double bond, and copolymers of a monomer having an olefinic double bond and a polyoxyalkylene chain and a vinyl ether monomer.

The carbon/oxygen molar ratio of the polyvinyl ether oil is preferably 2 or more and 7.5 or less and more preferably 2.5 or more and 5.8 or less. If the carbon/oxygen molar ratio is smaller than the above range, the hygroscopicity increases. If the carbon/oxygen molar ratio is larger than the above range, the miscibility deteriorates. The weight-average molecular weight of the polyvinyl ether is preferably 200 or more and 3000 or less and more preferably 500 or more and 1500 or less.

The pour point of the polyvinyl ether oil is preferably - 30°C or lower. The surface tension of the polyvinyl ether oil at 20°C is preferably 0.02 N/m or more and 0.04 N/m or less. The density of the polyvinyl ether oil at 15°C is preferably 0.8 g/cm³ or more and 1.8 g/cm³ or less. The saturated water content of the polyvinyl ether oil at a temperature of 30°C and a relative humidity of 90% is preferably 2000 ppm or more.

The refrigerating oil may contain polyvinyl ether as a main component. In the case where HFO-1234yf is contained as a refrigerant, the polyvinyl ether serving as a main component of the refrigerating oil has miscibility with HFO-1234yf. When the refrigerating oil has a kinematic viscosity at 40°C of 400 mm²/s or less, HFO-1234yf is dissolved in the refrigerating oil to some extent. When the refrigerating oil has a pour point of -30°C or lower, the flowability of the refrigerating oil is easily ensured even at positions at which the temperature of the refrigerant composition and the refrigerating oil is low in the refrigerant circuit. When the refrigerating oil has a surface tension at 20°C of 0.04 N/m or less, the refrigerating oil discharged from a compressor does not readily form large droplets of oil that are not easily carried away by a refrigerant composition. Therefore, the refrigerating oil discharged from the compressor is dissolved in HFO-1234yf and is easily returned to the compressor together with HFO-1234yf.

When the refrigerating oil has a kinematic viscosity at 40°C of 30 mm²/s or more, an insufficient oil film strength due to excessively low kinematic viscosity is suppressed, and thus good lubricity is easily achieved. When the refrigerating oil has a surface tension at 20°C of 0.02 N/m or more, the refrigerating oil does not readily form small droplets of oil in a gas refrigerant inside the compressor, which can suppress discharge of a large amount of refrigerating oil from the compressor. Therefore, a sufficient amount of refrigerating oil is easily stored in the compressor.

When the refrigerating oil has a saturated water content at 30°C/90%RH of 2000 ppm or more, a relatively high hygroscopicity of the refrigerating oil can be achieved. Thus, when HFO-1234yf is contained as a refrigerant, water in HFO-1234yf can be captured by the refrigerating oil to some extent. HFO-1234yf has a molecular structure that is easily altered or deteriorated because of the influence of water contained. Therefore, the hydroscopic effects of the refrigerating oil can suppress such deterioration.

Furthermore, when a particular resin functional component is disposed in the sealing portion or sliding portion that is in contact with a refrigerant flowing through the refrigerant circuit and the resin functional component is formed of any of polytetrafluoroethylene, polyphenylene sulfide, phenolic resin, polyamide resin, chloroprene rubber, silicon rubber, hydrogenated nitrile rubber, fluororubber, and hydrin rubber, the aniline point of the refrigerating oil is preferably set within a particular range in consideration of the adaptability with the resin functional component. By setting the aniline point in such a manner, for example, the adaptability of bearings constituting the resin functional component with the refrigerating oil is improved. Specifically, if the aniline point is excessively low, the refrigerating oil readily infiltrates bearings or the like, and the bearings or the like readily swell. On the other hand, if the aniline point is excessively high, the refrigerating oil does not readily infiltrate bearings or the like, and the bearings or the like readily shrink. Therefore, by setting the aniline point of the refrigerating oil within a particular range, the swelling or shrinking of the bearings or the like can be prevented. Herein, for example, if each of the bearings or the like deforms through swelling or shrinking, the desired length of a gap at a sliding portion cannot be maintained. This may increase the sliding resistance or decrease the rigidity of the sliding portion. However, when the aniline point of the refrigerating oil is set within a particular range as described above, the deformation of the bearings or the like through swelling or shrinking is suppressed, and thus such a problem can be avoided.

The vinyl ether monomers may be used alone or in combination of two or more. Examples of the hydrocarbon monomer having an olefinic double bond include ethylene, propylene, various butenes, various pentenes, various hexenes, various heptenes, various octenes, diisobutylene, triisobutylene, styrene, α-methylstyrene, and various alkylsubstituted styrenes. The hydrocarbon monomers having an olefinic double bond may be used alone or in combination of two or more.

The polyvinyl ether copolymer may be a block copolymer or a random copolymer. The polyvinyl ether oils may be used alone or in combination of two or more.

A polyvinyl ether oil preferably used has a structural unit represented by general formula (1) below. 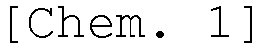 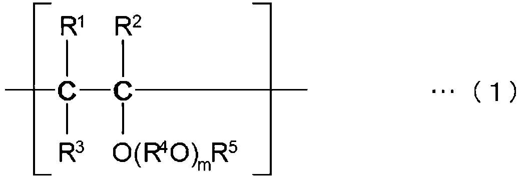 (In the formula, R¹, R², and R³ may be the same or different and each represent a hydrogen atom or a hydrocarbon group having 1 to 8 carbon atoms, R⁴ represents a divalent hydrocarbon group having 1 to 10 carbon atoms or an ether bond oxygen-containing divalent hydrocarbon group having 2 to 20 carbon atoms, R⁵ represents a hydrocarbon group having 1 to 20 carbon atoms, m represents a number at which the average of m in the polyvinyl ether is 0 to 10, R¹ to R⁵ may be the same or different in each of structural units, and when m represents 2 or more in one structural unit, a plurality of R⁴O may be the same or different.)

At least one of R¹, R², and R³ in the general formula (1) preferably represents a hydrogen atom. In particular, all of R¹, R², and R³ preferably represent a hydrogen atom. In the general formula (1), m preferably represents 0 or more and 10 or less, particularly preferably 0 or more and 5 or less, further preferably 0. R⁵ in the general formula (1) represents a hydrocarbon group having 1 to 20 carbon atoms. Specific examples of the hydrocarbon group include alkyl groups such as a methyl group, an ethyl group, a n-propyl group, an isopropyl group, a n-butyl group, an isobutyl group, a sec-butyl group, a tert-butyl group, various pentyl groups, various hexyl groups, various heptyl groups, and various octyl groups; cycloalkyl groups such as a cyclopentyl group, a cyclohexyl group, various methylcyclohexyl groups, various ethylcyclohexyl groups, and various dimethylcyclohexyl groups; aryl groups such as a phenyl group, various methylphenyl groups, various ethylphenyl groups, and various dimethylphenyl groups; and arylalkyl groups such as a benzyl group, various phenylethyl groups, and various methylbenzyl groups. Among the alkyl groups, the cycloalkyl groups, the phenyl group, the aryl groups, and the arylalkyl groups, alkyl groups, in particular, alkyl groups having 1 to 5 carbon atoms are preferred. For the polyvinyl ether oil contained, the ratio of a polyvinyl ether oil with R⁵ representing an alkyl group having 1 or 2 carbon atoms and a polyvinyl ether oil with R⁵ representing an alkyl group having 3 or 4 carbon atoms is preferably 40%:60% to 100%:0%.

The polyvinyl ether oil according to this embodiment may be a homopolymer constituted by the same structural unit represented by the general formula (1) or a copolymer constituted by two or more structural units. The copolymer may be a block copolymer or a random copolymer.

The polyvinyl ether oil according to this embodiment may be constituted by only the structural unit represented by the general formula (1) or may be a copolymer further including a structural unit represented by general formula (2) below. In this case, the copolymer may be a block copolymer or a random copolymer. 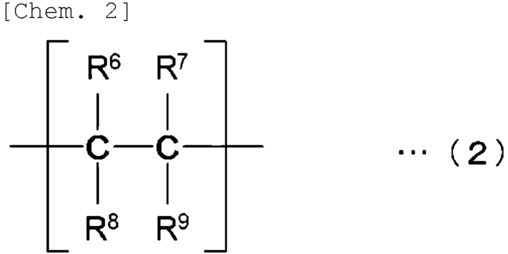 (In the formula, R⁶ to R⁹ may be the same or different and each represent a hydrogen atom or a hydrocarbon group having 1 to 20 carbon atoms.)

The vinyl ether monomer is, for example, a compound represented by general formula (3) below. 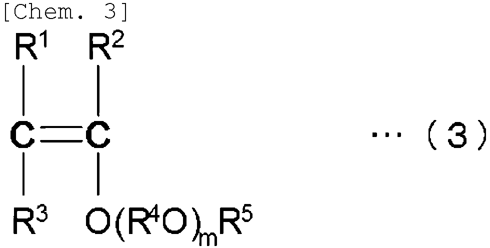 (In the formula, R¹, R², R³, R⁴, R⁵, and m have the same meaning as R¹, R², R³, R⁴, R⁵, and m in the general formula (1), respectively.)

Examples of various polyvinyl ether compounds corresponding to the above polyvinyl ether compound include vinyl methyl ether; vinyl ethyl ether; vinyl-n-propyl ether; vinyl-isopropyl ether; vinyl-n-butyl ether; vinyl-isobutyl ether; vinyl-sec-butyl ether; vinyl-tert-butyl ether; vinyl-n-pentyl ether; vinyl-n-hexyl ether; vinyl-2-methoxyethyl ether; vinyl-2-ethoxyethyl ether; vinyl-2-methoxy-1-methylethyl ether; vinyl-2-methoxy-propyl ether; vinyl-3,6-dioxaheptyl ether; vinyl-3,6,9-trioxadecyl ether; vinyl-1,4-dimethyl-3,6-dioxaheptyl ether; vinyl-1,4,7-trimethyl-3,6,9-trioxadecyl ether; vinyl-2,6-dioxa-4-heptyl ether; vinyl-2,6,9-trioxa-4-decyl ether; 1-methoxypropene; 1-ethoxypropene; 1-n-propoxypropene; 1-isopropoxypropene; 1-n-butoxypropene; 1-isobutoxypropene; 1-sec-butoxypropene; 1-tert-butoxypropene; 2-methoxypropene; 2-ethoxypropene; 2-n-propoxypropene; 2-isopropoxypropene; 2-n-butoxypropene; 2-isobutoxypropene; 2-sec-butoxypropene; 2-tert-butoxypropene; 1-methoxy-1-butene; 1-ethoxy-1-butene; 1-n-propoxy-1-butene; 1-isopropoxy-1-butene; 1-n-butoxy-1-butene; 1-isobutoxy-1-butene; 1-sec- butoxy-1-butene; 1-tert-butoxy-1-butene; 2-methoxy-1-butene; 2-ethoxy-1-butene; 2-n-propoxy-1-butene; 2-isopropoxy-1-butene; 2-n-butoxy-1-butene; 2-isobutoxy-1-butene; 2-sec-butoxy-1-butene; 2-tert-butoxy-1-butene; 2-methoxy-2-butene; 2-ethoxy-2-butene; 2-n-propoxy-2-butene; 2-isopropoxy-2-butene; 2-n-butoxy-2-butene; 2-isobutoxy-2-butene; 2-sec-butoxy-2-butene; and 2-tert-butoxy-2-butene. These vinyl ether monomers can be produced by a publicly known method.

The end of the polyvinyl ether compound having the structural unit represented by the general formula (1) can be converted into a desired structure by a method described in the present disclosure and a publicly known method. Examples of the group introduced by conversion include saturated hydrocarbons, ethers, alcohols, ketones, amides, and nitriles.

The polyvinyl ether compound preferably has the following end structures. 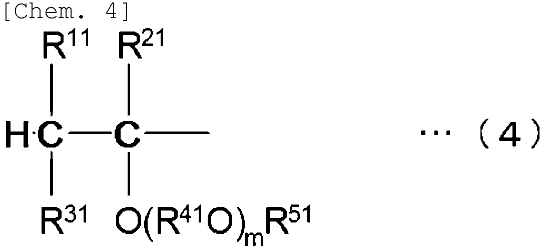 (In the formula, R¹¹, R²¹, and R³¹ may be the same or different and each represent a hydrogen atom or a hydrocarbon group having 1 to 8 carbon atoms, R⁴¹ represents a divalent hydrocarbon group having 1 to 10 carbon atoms or an ether bond oxygen-containing divalent hydrocarbon group having 2 to 20 carbon atoms, R⁵¹ represents a hydrocarbon group having 1 to 20 carbon atoms, m represents a number at which the average of m in the polyvinyl ether is 0 to 10, and when m represents 2 or more, a plurality of R⁴¹O may be the same or different.) 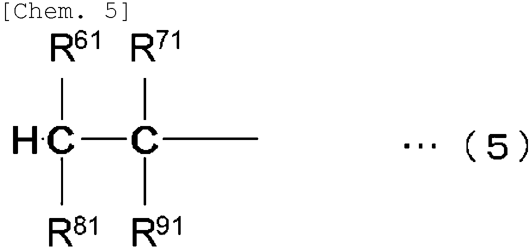 (In the formula, R⁶¹, R⁷¹, R⁸¹, and R⁹¹ may be the same or different and each represent a hydrogen atom or a hydrocarbon group having 1 to 20 carbon atoms.) 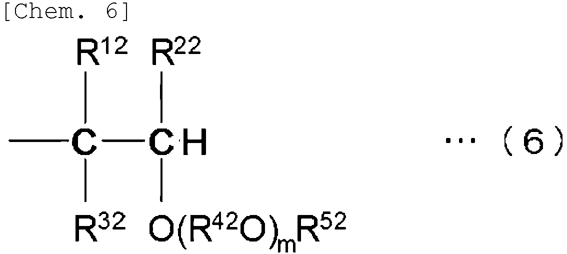 (In the formula, R¹², R²², and R³² may be the same or different and each represent a hydrogen atom or a hydrocarbon group having 1 to 8 carbon atoms, R⁴² represents a divalent hydrocarbon group having 1 to 10 carbon atoms or an ether bond oxygen-containing divalent hydrocarbon group having 2 to 20 carbon atoms, R⁵² represents a hydrocarbon group having 1 to 20 carbon atoms, m represents a number at which the average of m in the polyvinyl ether is 0 to 10, and when m represents 2 or more, a plurality of R⁴²O may be the same or different.) 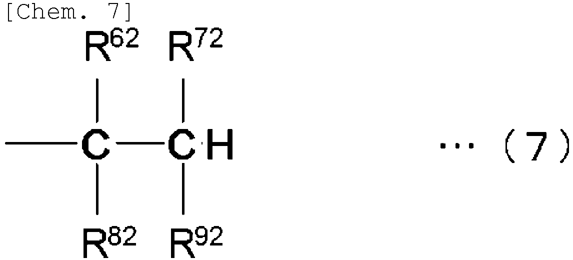 (In the formula, R⁶², R⁷², R⁸², and R⁹² may be the same or different and each represent a hydrogen atom or a hydrocarbon group having 1 to 20 carbon atoms.) 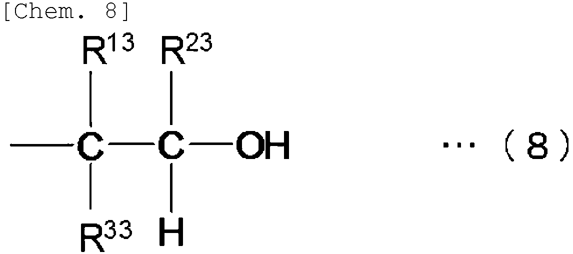 (In the formula, R¹³, R²³, and R³³ may be the same or different and each represent a hydrogen atom or a hydrocarbon group having 1 to 8 carbon atoms.)

The polyvinyl ether oil according to this embodiment can be produced by polymerizing the above-described monomer through, for example, radical polymerization, cationic polymerization, or radiation-induced polymerization. After completion of the polymerization reaction, a typical separation/purification method is performed when necessary to obtain a desired polyvinyl ether compound having a structural unit represented by the general formula (1).

### (Polyoxyalkylene oil)

The polyoxyalkylene oil is a polyoxyalkylene compound obtained by, for example, polymerizing an alkylene oxide having 2 to 4 carbon atoms (e.g., ethylene oxide or propylene oxide) using water or a hydroxyl group-containing compound as an initiator. The hydroxyl group of the polyoxyalkylene compound may be etherified or esterified. The polyoxyalkylene oil may contain an oxyalkylene unit of the same type or two or more oxyalkylene units in one molecule. The polyoxyalkylene oil preferably contains at least an oxypropylene unit in one molecule.

Specifically, the polyoxyalkylene oil is, for example, a compound represented by general formula (9) below.

R¹⁰¹-[(OR¹⁰²)ₖ-OR¹⁰³]₁ ··· (9)

(In the formula, R¹⁰¹ represents a hydrogen atom, an alkyl group having 1 to 10 carbon atoms, an acyl group having 2 to 10 carbon atoms, or an aliphatic hydrocarbon group having 2 to 6 bonding sites and 1 to 10 carbon atoms, R¹⁰² represents an alkylene group having 2 to 4 carbon atoms, R¹⁰³ represents a hydrogen atom, an alkyl group having 1 to 10 carbon atoms, or an acyl group having 2 to 10 carbon atoms, l represents an integer of 1 to 6, and k represents a number at which the average of k × l is 6 to 80.)

In the general formula (9), the alkyl group represented by R¹⁰¹ and R¹⁰³ may be a linear, branched, or cyclic alkyl group. Specific examples of the alkyl group include a methyl group, an ethyl group, a n-propyl group, an isopropyl group, various butyl groups, various pentyl groups, various hexyl groups, various heptyl groups, various octyl groups, various nonyl groups, various decyl groups, a cyclopentyl group, and a cyclohexyl group. If the number of carbon atoms of the alkyl group exceeds 10, the miscibility with a refrigerant deteriorates, which may cause phase separation. The number of carbon atoms of the alkyl group is preferably 1 to 6.

The acyl group represented by R¹⁰¹ and R¹⁰³ may have a linear, branched, or cyclic alkyl group moiety. Specific examples of the alkyl group moiety of the acyl group include various groups having 1 to 9 carbon atoms that are mentioned as specific examples of the alkyl group. If the number of carbon atoms of the acyl group exceeds 10, the miscibility with a refrigerant deteriorates, which may cause phase separation. The number of carbon atoms of the acyl group is preferably 2 to 6.

When R¹⁰¹ and R¹⁰³ each represent an alkyl group or an acyl group, R¹⁰¹ and R¹⁰³ may be the same or different.

Furthermore, when l represents 2 or more, a plurality of R¹⁰³ in one molecule may be the same or different.

When R¹⁰¹ represents an aliphatic hydrocarbon group having 2 to 6 bonding sites and 1 to 10 carbon atoms, the aliphatic hydrocarbon group may be a linear group or a cyclic group. Examples of the aliphatic hydrocarbon group having two bonding sites include an ethylene group, a propylene group, a butylene group, a pentylene group, a hexylene group, a heptylene group, an octylene group, a nonylene group, a decylene group, a cyclopentylene group, and a cyclohexylene group. Examples of the aliphatic hydrocarbon group having 3 to 6 bonding sites include residual groups obtained by removing hydroxyl groups from polyhydric alcohols such as trimethylolpropane, glycerol, pentaerythritol, sorbitol, 1,2,3-trihydroxycyclohexane, and 1,3,5-trihydroxycyclohexane.

If the number of carbon atoms of the aliphatic hydrocarbon group exceeds 10, the miscibility with a refrigerant deteriorates, which may cause phase separation. The number of carbon atoms is preferably 2 to 6.

R¹⁰² in the general formula (9) represents an alkylene group having 2 to 4 carbon atoms. Examples of the oxyalkylene group serving as a repeating unit include an oxyethylene group, an oxypropylene group, and an oxybutylene group. The polyoxyalkylene oil may contain an oxyalkylene group of the same type or two or more oxyalkylene groups in one molecule, but preferably contains at least an oxypropylene unit in one molecule. In particular, the content of the oxypropylene unit in the oxyalkylene unit is suitably 50 mol% or more.

In the general formula (9), l represents an integer of 1 to 6, which can be determined in accordance with the number of bonding sites of R¹⁰¹. For example, when R¹⁰¹ represents an alkyl group or an acyl group, l represents 1. When R¹⁰¹ represents an aliphatic hydrocarbon group having 2, 3, 4, 5, and 6 bonding sites, l represents 2, 3, 4, 5, and 6, respectively. Preferably, l represents 1 or 2. Furthermore, k preferably represents a number at which the average of k × l is 6 to 80.

For the structure of the polyoxyalkylene oil, a polyoxypropylene diol dimethyl ether represented by general formula (10) below and a poly(oxyethylene/oxypropylene) diol dimethyl ether represented by general formula (11) below are suitable from the viewpoints of economy and the above-described effects. Furthermore, a polyoxypropylene diol monobutyl ether represented by general formula (12) below, a polyoxypropylene diol monomethyl ether represented by general formula (13) below, a poly(oxyethylene/oxypropylene) diol monomethyl ether represented by general formula (14) below, a poly(oxyethylene/oxypropylene) diol monobutyl ether represented by general formula (15) below, and a polyoxypropylene diol diacetate represented by general formula (16) below are suitable from the viewpoint of economy and the like.

CH₃O-(C₃H₆O)ₕ-CH₃ ··· (10)

(In the formula, h represents 6 to 80.)

CH₃O-(C₂H₄O)ᵢ-(C₃H₆O)ⱼ-CH₃ ··· (11)

(In the formula, i and j each represent 1 or more and the sum of i and j is 6 to 80.)

C₄H₉O-(C₃H₆O)ₕ-H ··· (12)

(In the formula, h represents 6 to 80.)

CH₃O-(C₃H₆O)ₕ-H ··· (13)

(In the formula, h represents 6 to 80.)

CH₃O-(C₂H₄O)ᵢ-(C₃H₆O)ⱼ-H ··· (14)

(In the formula, i and j each represent 1 or more and the sum of i and j is 6 to 80.)

C₄H₉O- (C₂H₄O)ᵢ-(C₃H₆O)ⱼ-H ··· (15)

(In the formula, i and j each represent 1 or more and the sum of i and j is 6 to 80.)

CH₃COO-(C₃H₆O)ₕ-COCH₃ ··· (16)

(In the formula, h represents 6 to 80.)

The polyoxyalkylene oils may be used alone or in combination of two or more.

### (2-2) Hydrocarbon refrigerating oil

The hydrocarbon refrigerating oil that can be used is, for example, an alkylbenzene.

The alkylbenzene that can be used is a branched alkylbenzene synthesized from propylene polymer and benzene serving as raw materials using a catalyst such as hydrogen fluoride or a linear alkylbenzene synthesized from normal paraffin and benzene serving as raw materials using the same catalyst. The number of carbon atoms of the alkyl group is preferably 1 to 30 and more preferably 4 to 20 from the viewpoint of achieving a viscosity appropriate as a lubricating base oil. The number of alkyl groups in one molecule of the alkylbenzene is dependent on the number of carbon atoms of the alkyl group, but is preferably 1 to 4 and more preferably 1 to 3 to control the viscosity within the predetermined range.

The hydrocarbon refrigerating oil preferably circulates through a refrigeration cycle system together with a refrigerant. Although it is most preferable that the refrigerating oil is soluble with a refrigerant, for example, a refrigerating oil (e.g., a refrigerating oil disclosed in Japanese Patent No. 2803451) having low solubility can also be used as long as the refrigerating oil is capable of circulating through a refrigeration cycle system together with a refrigerant. To allow the refrigerating oil to circulate through a refrigeration cycle system, the refrigerating oil is required to have a low kinematic viscosity. The kinematic viscosity of the hydrocarbon refrigerating oil at 40°C is preferably 1 mm²/s or more and 50 mm²/s or less and more preferably 1 mm²/s or more and 25 mm²/s or less.

These refrigerating oils may be used alone or in combination of two or more.

The content of the hydrocarbon refrigerating oil in the working fluid for a refrigerating machine may be, for example, 10 parts by mass or more and 100 parts by mass or less and is more preferably 20 parts by mass or more and 50 parts by mass or less relative to 100 parts by mass of the refrigerant composition.

### (2-3) Additive

The refrigerating oil may contain one or two or more additives.

Examples of the additives include an acid scavenger, an extreme pressure agent, an antioxidant, an antifoaming agent, an oiliness improver, a metal deactivator such as a copper deactivator, an anti-wear agent, and a compatibilizer.

Examples of the acid scavenger that can be used include epoxy compounds such as phenyl glycidyl ether, alkyl glycidyl ether, alkylene glycol glycidyl ether, cyclohexene oxide, α-olefin oxide, and epoxidized soybean oil; and carbodiimides. Among them, phenyl glycidyl ether, alkyl glycidyl ether, alkylene glycol glycidyl ether, cyclohexene oxide, and α-olefin oxide are preferred from the viewpoint of miscibility. The alkyl group of the alkyl glycidyl ether and the alkylene group of the alkylene glycol glycidyl ether may have a branched structure. The number of carbon atoms may be 3 or more and 30 or less, and is more preferably 4 or more and 24 or less and further preferably 6 or more and 16 or less. The total number of carbon atoms of the α-olefin oxide may be 4 or more and 50 or less, and is more preferably 4 or more and 24 or less and further preferably 6 or more and 16 or less. The acid scavengers may be used alone or in combination of two or more.

The extreme pressure agent may contain, for example, a phosphoric acid ester.

Examples of the phosphoric acid ester that can be used include phosphoric acid esters, phosphorous acid esters, acidic phosphoric acid esters, and acidic phosphorous acid esters. The extreme pressure agent may contain an amine salt of a phosphoric acid ester, a phosphorous acid ester, an acidic phosphoric acid ester, or an acidic phosphorous acid ester.

Examples of the phosphoric acid ester include triaryl phosphates, trialkyl phosphates, trialkylaryl phosphates, triarylalkyl phosphates, and trialkenyl phosphates. Specific examples of the phosphoric acid ester include triphenyl phosphate, tricresyl phosphate, benzyl diphenyl phosphate, ethyl diphenyl phosphate, tributyl phosphate, ethyl dibutyl phosphate, cresyl diphenyl phosphate, dicresyl phenyl phosphate, ethylphenyl diphenyl phosphate, diethylphenyl phenyl phosphate, propylphenyl diphenyl phosphate, dipropylphenyl phenyl phosphate, triethylphenyl phosphate, tripropylphenyl phosphate, butylphenyl diphenyl phosphate, dibutylphenyl phenyl phosphate, tributylphenyl phosphate, trihexyl phosphate, tri(2-ethylhexyl) phosphate, tridecyl phosphate, trilauryl phosphate, trimyristyl phosphate, tripalmityl phosphate, tristearyl phosphate, and trioleyl phosphate.

Specific examples of the phosphorous acid ester include triethyl phosphite, tributyl phosphite, triphenyl phosphite, tricresyl phosphite, tri(nonylphenyl) phosphite, tri(2-ethylhexyl) phosphite, tridecyl phosphite, trilauryl phosphite, triisooctyl phosphite, diphenylisodecyl phosphite, tristearyl phosphite, and trioleyl phosphite.

Specific examples of the acidic phosphoric acid ester include 2-ethylhexyl acid phosphate, ethyl acid phosphate, butyl acid phosphate, oleyl acid phosphate, tetracosyl acid phosphate, isodecyl acid phosphate, lauryl acid phosphate, tridecyl acid phosphate, stearyl acid phosphate, and isostearyl acid phosphate.

Specific examples of the acidic phosphorous acid ester include dibutyl hydrogen phosphite, dilauryl hydrogen phosphite, dioleyl hydrogen phosphite, distearyl hydrogen phosphite, and diphenyl hydrogen phosphite. Among the phosphoric acid esters, oleyl acid phosphate and stearyl acid phosphate are suitably used.

Among amines used for amine salts of phosphoric acid esters, phosphorous acid esters, acidic phosphoric acid esters, or acidic phosphorous acid esters, specific examples of mono-substituted amines include butylamine, pentylamine, hexylamine, cyclohexylamine, octylamine, laurylamine, stearylamine, oleylamine, and benzylamine. Specific examples of di-substituted amines include dibutylamine, dipentylamine, dihexylamine, dicyclohexylamine, dioctylamine, dilaurylamine, distearylamine, dioleylamine, dibenzylamine, stearyl·monoethanolamine, decyl·monoethanolamine, hexyl·monopropanolamine, benzyl·monoethanolamine, phenyl·monoethanolamine, and tolyl·monopropanolamine. Specific examples of tri-substituted amines include tributylamine, tripentylamine, trihexylamine, tricyclohexylamine, trioctylamine, trilaurylamine, tristearylamine, trioleylamine, tribenzylamine, dioleyl·monoethanolamine, dilauryl·monopropanolamine, dioctyl·monoethanolamine, dihexyl·monopropanolamine, dibutyl·monopropanolamine, oleyl·diethanolamine, stearyl·dipropanolamine, lauryl·diethanolamine, octyl·dipropanolamine, butyl·diethanolamine, benzyl·diethanolamine, phenyl·diethanolamine, tolyl·dipropanolamine, xylyl·diethanolamine, triethanolamine, and tripropanolamine.

Examples of extreme pressure agents other than the above-described extreme pressure agents include extreme pressure agents based on organosulfur compounds such as monosulfides, polysulfides, sulfoxides, sulfones, thiosulfinates, sulfurized fats and oils, thiocarbonates, thiophenes, thiazoles, and methanesulfonates; extreme pressure agents based on thiophosphoric acid esters such as thiophosphoric acid triesters; extreme pressure agents based on esters such as higher fatty acids, hydroxyaryl fatty acids, polyhydric alcohol esters, and acrylic acid esters; extreme pressure agents based on organochlorine compounds such as chlorinated hydrocarbons, e.g., chlorinated paraffin and chlorinated carboxylic acid derivatives; extreme pressure agents based on fluoroorganic compounds such as fluorinated aliphatic carboxylic acids, fluorinated ethylene resins, fluorinated alkylpolysiloxanes, and fluorinated graphites; extreme pressure agents based on alcohols such as higher alcohols; and extreme pressure agents based on metal compounds such as naphthenic acid salts (e.g., lead naphthenate), fatty acid salts (e.g., lead fatty acid), thiophosphoric acid salts (e.g., zinc dialkyldithiophosphate), thiocarbamic acid salts, organomolybdenum compounds, organotin compounds, organogermanium compounds, and boric acid esters.

The antioxidant that can be used is, for example, a phenol-based antioxidant or an amine-based antioxidant. Examples of the phenol-based antioxidant include 2,6-di-tert-butyl-4-methylphenol (DBPC), 2,6-di-tert-butyl-4-ethylphenol, 2,2'-methylenebis(4-methyl-6-tert-butylphenol), 2,4-dimethyl-6-tert-butylphenol, 2,6-di-tert-butylphenol, di-tert-butyl-p-cresol, and bisphenol A. Examples of the amine-based antioxidant include N,N'-diisopropyl-p-phenylenediamine, N,N'-di-sec-butyl-p-phenylenediamine, phenyl-α-naphthylamine, N,N'-di-phenyl-p-phenylenediamine, and N,N-di(2-naphthyl)-p-phenylenediamine. An oxygen scavenger that captures oxygen can also be used as the antioxidant.

The antifoaming agent that can be used is, for example, a silicon compound.

The oiliness improver that can be used is, for example, a higher alcohol or a fatty acid.

The metal deactivator such as a copper deactivator that can be used is, for example, benzotriazole or a derivative thereof.

The anti-wear agent that can be used is, for example, zinc dithiophosphate.

The compatibilizer is not limited, and can be appropriately selected from commonly used compatibilizers.

The compatibilizers may be used alone or in combination of two or more. Examples of the compatibilizer include polyoxyalkylene glycol ethers, amides, nitriles, ketones, chlorocarbons, esters, lactones, aryl ethers, fluoroethers, and 1,1,1-trifluoroalkanes. The compatibilizer is particularly preferably a polyoxyalkylene glycol ether.

The refrigerating oil may optionally contain, for example, a load-bearing additive, a chlorine scavenger, a detergent dispersant, a viscosity index improver, a heat resistance improver, a stabilizer, a corrosion inhibitor, a pour-point depressant, and an anticorrosive.

The content of each additive in the refrigerating oil may be 0.01 mass% or more and 5 mass% or less and is preferably 0.05 mass% or more and 3 mass% or less. The content of the additive in the working fluid for a refrigerating machine constituted by the refrigerant composition and the refrigerating oil is preferably 5 mass% or less and more preferably 3 mass% or less.

The refrigerating oil preferably has a chlorine concentration of 50 ppm or less and preferably has a sulfur concentration of 50 ppm or less.

### (3) Refrigerant Cycle Apparatus

A refrigerant cycle apparatus that uses the above-described refrigerant 2C4 and also uses refrigeration oil is described below. The refrigerant cycle apparatus is a refrigerant cycle apparatus for freezing or cold storage, and is typically called a cold-storage showcase or a freezing showcase. Representative forms of cold-storage showcases and freezing showcases include an open type showcase that blocks outside air from entering a display chamber by forming an air curtain, and a closed type showcase (reach-in showcase) that blocks outside air from entering a display chamber by a glass panel or the like. Moreover, the representative forms include a built-in showcase in which refrigeration cycle devices, such as a compressor and a condenser, are built in the showcase, and a separate-installation type showcase that is connected to a refrigerating machine including a compressor and a condenser via a refrigerant pipe. Furthermore, the temperature zones to be used include a freezing zone and a cold-storage zone. The freezing zone is, for example, for ice creams or for frozen foods. The cold-storage zone is, for example, for drinking water or alcohol, or for perishable foods.

### (3-1) Built-in Type Showcase

Fig. 3 is a vertically sectioned side view of a built-in open showcase that is an example of a cold-storage showcase.

A showcase body 101 constituting the open showcase has a rectangular shape in front view and plan view. The showcase body 101 includes a top panel portion 102 located at the top, a machine chamber 103 located at the bottom, and a display chamber 104 located between the top panel portion 102 and the machine chamber 103.

The display chamber 104 is surrounded by a ceiling portion 104b, a bottom surface portion 104c, and a rear surface wall 104a. The rear surface wall 104a is inclined to gradually protrude forward as the rear surface wall 104a extends from the ceiling portion 104b to the bottom surface portion 104c. The rear surface wall 104a is provided with shelfs 105 of four stages spaced apart at a predetermined interval. Products such as foods and drinks for sale are placed and displayed on each of the shelfs 105.

The rear surface wall 104a of the display chamber 104 has a plurality of cooling blow-out ports 106. Cold air flows from the cooling blow-out ports 106 to the products placed on the shelfs 105 as described later.

An air-curtain blow-out port 108 is formed in the ceiling portion 104b. The air-curtain blow-out port 108 blows out cold air that inhibits air from entering the display chamber 104 from the outside of the showcase body 101.

The inside of the top panel portion 102 is hollow, and an air-curtain duct 109 for guiding the cold air to the air-curtain blow-out port 108 is formed. A proximal end portion of the air-curtain duct 109 communicates with a cold-air circulation duct 110 which will be described later.

A suction port 111 is provided at the bottom surface portion 104c serving as an upper surface of the machine chamber 103. The suction port 111 sucks the cold air blown out from the cooling blow-out ports 106 of the rear surface wall 104a and air-curtain cold air blown out from the air-curtain blow-out port 108 of the ceiling portion 104b. The suction port 111 is positioned such that no obstruction is present between the suction port 111 and the air-curtain blow-out port 108. Thus, the air-curtain cold air blown out from the air-curtain blow-out port 108 is smoothly sucked into the suction port 111 and stably forms an air curtain without being obstructed by the shelfs 105.

A compressor 121, a condenser 122, an expansion valve 123, and an air fan 125 are disposed in the machine chamber 103.

The cold-air circulation duct 110 is formed between the rear surface wall 104a and a partition plate 115. An exhaust duct 117 is formed between the partition plate 115 and a showcase rear surface portion 101a.

The cold-air circulation duct 110, at the lower end thereof, communicates with the suction port 111. The cold-air circulation duct 110 communicates with each cooling blow-out port 106 of the rear surface wall 104a. Moreover, the cold-air circulation duct 110, at the upper end thereof, communicates with the air-curtain duct 109.

A cold-air circulation fan 113 is disposed in the cold-air circulation duct 110, at a position at a predetermined distance from the suction port 111. An evaporator 124 is disposed downwind of the cold-air circulation fan 113 in the cold-air circulation duct 110. The evaporator 124 constitutes a refrigerant cycle together with the compressor 121, the condenser 122, the expansion valve 123, a receiver 126, a dryer 127, and an accumulator 128 via a refrigerant pipe 129. The dryer 127 contains a drying agent to prevent clogging of the expansion valve 123.

An air ventilation port 107 is formed in a front surface portion of the machine chamber 103. The air ventilation port 107 takes in outside air into a machine chamber 33 upon driving of the air fan 125 for cooling the condenser 122.

The machine chamber 103 communicates with the exhaust duct 117. An upper end portion of the exhaust duct 117 serves as an opening 117a and is open to the outside. Thus, the air taken into the machine chamber 103 from the air ventilation port 107 circulates in the machine chamber 103, then rises through the exhaust duct 117, and is exhausted from the opening 117a to the outside.

In the open showcase thus configured, the compressor 121 is driven, and the air fan 125 and the cold-air circulation fan 113 are driven. The refrigerant is compressed in the compressor 121, and the refrigerant is guided as a high-temperature high-pressure gas refrigerant to the condenser 122. The air fan 125 takes in the air into the machine chamber 103 via the air ventilation port 107 formed in the front surface portion of the machine chamber 103, and causes the air to pass through the condenser 122.

In the condenser 122, a gas refrigerant exchanges heat with the air taken into the machine chamber 33 by the air fan 125 and is condensed. The air after the heat exchange flows in the peripheral area of from the condenser 122 to the compressor 121 to cool the condenser 122 and the compressor 121. The air which has been turned into high-temperature air is then guided by the exhaust duct 117 and is exhausted upward from the opening 117a.

A liquid refrigerant liquefied in the condenser 122 is decompressed by the expansion valve 123 and is guided to the evaporator 124. In the evaporator 124, the refrigerant exchanges heat with the air sent from the cold-air circulation fan 113 and is evaporated. At this time, the refrigerant takes heat from the air and is evaporated, and the refrigerant flows to the compressor 121.

The air (cold air) which has exchanged heat with the refrigerant and has been turned into low-temperature air in the evaporator 124 rises through the cold-air circulation duct 110 and is guided forward from each cooling blow-out port 106 in the middle of the cold-air circulation duct 110. The cold air which has passed through each cooling blow-out port 106 flows to the display chamber 104. In other words, the cold air is blown out to products placed on each shelf 105 from the corresponding cooling blow-out port 106, and the products are cooled with the cold air.

The cold air which has reached the upper end portion of the cold-air circulation duct 110 flows to the air-curtain duct 109, and is blown out downward from the air-curtain blow-out port 108 on the front surface side. The air curtain can almost block the entry of the outside air from the outside to the display chamber 104.

Both the cold air blown out from the air-curtain blow-out port 108 and the cold air blown out from the cooling blow-out ports 106 are sucked into the suction port 111. The cold air which have provided the functions are mixed to each other and sucked into the suction port 111.

### (3-2) Separate-installation Type Showcase

Fig. 4 illustrates a separate-installation type showcase cooling apparatus. A showcase cooling apparatus 201 cools a plurality of showcases 210a to 210j (see Fig. 5 for the showcase 210i and the showcase 210j) installed in a store interior 202 of a convenience store (shop). A refrigerating machine 206 connected to the respective showcases 210a to 210j via refrigerant pipes 207 and 208 is installed outside the store. The showcases 210a to 210j and the refrigerating machine 206 constitute the showcase cooling apparatus 201.

The showcases 210a to 210j are open showcases. The showcases 210a, and 210c to 210f are for displaying chilled foods (products) in the inner spaces (display chambers) to sell the chilled foods. The inner spaces of the showcases 210a, and 210c to 210f are cooled to a relatively low cold-storage temperature zone (0°C to +5°C) that is suitable for cooling chilled foods. The showcase 210b is for displaying packed meals (products) in the inner space (display chamber) to sell the packed meals. The inner space is cooled to a relatively high cold-storage temperature zone (+15°C to +20°C) that is suitable for cooling packed meals. Moreover, the showcases 210a and 210b can be used while display is switched between the display of chilled foods and the display of packed meals. The showcase 210i and the showcase 210j are freezing showcases for displaying frozen foods and ice creams in a frozen state (-20°C to -25°C). In the showcase 210i and the showcase 210j, the target value of the evaporation temperature of an evaporator 271, which will be described later, is set to, for example, -30°C to -40°C, and a compressor 257 and so forth are controlled. In a refrigerant cycle apparatus for freezing or cold storage, the target value of the evaporation temperature of the evaporator 271 is selected from a range of +10°C to -45°C.

The showcases 210g and 210h are closed type showcases having transparent glass panels and installed on a wall surface of the store. The showcases 210g and 210h are for displaying the above-described chilled foods (products) in the inner spaces (display chambers) to sell the chilled foods. The inner spaces of the showcases 210g and 210h are cooled to a relatively low cold-storage temperature zone (0°C to +5°C) that is suitable for cooling the chilled foods. The respective showcases 210a to 210j are connected in parallel with respect to the refrigerating machine 206 by the refrigerant pipes 207 and 208.

Next, devices that constitute a refrigerant circuit in the showcase cooling apparatus 201 are described with reference to Fig. 5.

The showcase cooling apparatus 201 includes a dual refrigerant cycle including a high-stage-side refrigerant circuit 250 in which the above-described refrigerant 2C4 is enclosed; and a plurality of low-stage-side refrigerant circuits 270 in which a carbon dioxide refrigerant (CO2 refrigerant) is enclosed. The high-stage-side refrigerant circuit 250 mainly includes a compressor 257 whose operating frequency is variably controllable, a radiator 258, an expansion valve 259, and a plurality of evaporators 271 connected in parallel. The low-stage-side refrigerant circuit 270 mainly includes a compressor 273, a radiator 274, an expansion valve 276, an evaporator 277, a dryer 281, a receiver 282, and an accumulator 283. In this case, the showcase 210i and the showcase 210j each include the low-stage-side refrigerant circuit 270.

A fan 251 that air-cools the compressor 257, the radiator 258, the expansion valve 259, and the radiator 258 of the high-stage-side refrigerant circuit 250 are installed in the refrigerating machine 206.

One of the low-stage-side refrigerant circuits 270, the evaporator 271 of the corresponding high-stage-side refrigerant circuit 250, and a cold-air circulation fan 280 that causes cold air which has exchanged heat with the radiator 274 of the low-stage-side refrigerant circuit 270 to circulate in the inner space are installed in each of the showcase 210i and the showcase 210j. The inlet of each evaporator 271 of the high-stage-side refrigerant circuit 250 is connected to the refrigerant pipe 207, the outlet thereof is connected to the refrigerant pipe 208 and cascade-connected to the radiator 274 of the low-stage-side refrigerant circuit 270 of corresponding one of the showcases 210a to 210h in terms of the heat exchange, and the components constitute a cascade heat exchanger 290. The cascade heat exchanger 290 is thermally insulated from the peripheral area. Thus, the radiator 271 of the low-stage-side refrigerant circuit 270 constituting the cascade heat exchanger 290 is the most stable in terms of the temperature.

Note that the inner space of a cold-storage showcase such as the showcase 210a is cooled by the evaporator 271 of the high-stage-side refrigerant circuit 250. Thus, a cold-air circulation fan 280a that causes the cold air which has exchanged heat with the evaporator 271 to circulate in the inner space is provided.

### (3-3) Refrigerant Circuit Used for Refrigerant Cycle Apparatus for Freezing or Cold Storage

The built-in type showcase described in the above-mentioned (3-1) employs simple, single-stage compression refrigerant cycle. Moreover, the separate-installation type showcase cooling apparatus 201 described in the above-mentioned (3-2) employs a refrigerant circuit including a dual refrigerant cycle. Instead of these refrigerant circuits, or by adding a function to these refrigerant circuits, it is preferable to employ a refrigerant circuit as follows in the refrigerant cycle apparatus for freezing or cold storage.

(3-3-1)
It is also preferable to add a function of intermediate injection as illustrated in Fig. 6 to the refrigerant circuit described in the above-mentioned (3-1) illustrated in Fig. 3. An intermediate injection circuit 140 is added to the refrigerant cycle apparatus for freezing or cold storage. The intermediate injection circuit 140 guides a portion of a high-pressure refrigerant flowing between the receiver 126 and the dryer 127 to the middle of a compression chamber in the compressor 121 via an expansion valve 141. The refrigerant decompressed in the expansion valve 141 and having an intermediate pressure cools the refrigerant in the middle of compression in the compressor 121, thereby increasing compression efficiency. In particular, in the refrigerant cycle apparatus for freezing or cold storage, the compression ratio tends to increase, and hence the effect of the intermediate injection is large. The refrigerant that is input from the intermediate injection circuit 140 into the compressor 121 may be a gas refrigerant; however, the refrigerant is preferably a gas-liquid two-phase refrigerant in a slightly moist state.

(3-3-2)
To decrease the lower limit value of the capacity, it is preferable to add a bypass circuit 150 as illustrated in Fig. 7 to the refrigerant circuit described in the above-mentioned (3-1) illustrated in Fig. 3. In a case where the capacity of the compressor 121 is not able to be decreased and when there is a request for further decreasing the capacity of freezing or cold storage, the refrigerant cycle apparatus for freezing or cold storage can satisfy the request by opening an open-close valve 151 of the bypass circuit 150.

(3-3-3)
It is also preferable to add a function of suction injection as illustrated in Fig. 8 to the refrigerant circuit described in the above-mentioned (3-1) illustrated in Fig. 3. A suction injection circuit 160 is added to the refrigerant cycle apparatus for freezing or cold storage. The suction injection circuit 160 guides a portion of a high-pressure refrigerant flowing between the dryer 127 and the expansion valve 123 to the suction side of the compressor 121 via an expansion valve 161. When the discharge refrigerant temperature of the compressor 121 is high and the expansion valve 161 is opened, the refrigerant decompressed in the expansion valve 161 and having a low pressure is sucked into the compressor 121, thereby decreasing the discharge refrigerant temperature of the compressor 121.

(3-3-4)
It is also preferable to add a function of intermediate injection and a function of subcooling as illustrated in Fig. 9 to the refrigerant circuit described in the above-mentioned (3-1) illustrated in Fig. 3. An intermediate injection circuit 170 and an economizer heat exchanger 175 are added to the refrigerant cycle apparatus for freezing or cold storage. The intermediate injection circuit 170 guides a portion of a high-pressure refrigerant flowing between the receiver 126 and the dryer 127 to the middle of a compression chamber in the compressor 121 via an expansion valve 171. The economizer heat exchanger 175 causes an intermediate-pressure refrigerant decompressed by the expansion valve 171 and having a decreased temperature to exchange heat with a high-pressure refrigerant flowing between the receiver 126 and the dryer 127 to decrease the temperature of the high-pressure refrigerant. Thus, the high-pressure refrigerant is turned into a subcooling state, and controllability of the downstream-side expansion valve 123 increases. Moreover, the refrigerant decompressed by the expansion valve 141 and having an intermediate pressure cools the refrigerant in the middle of the compression in the compressor 121, thereby increasing compression efficiency.

(3-3-5)
The refrigerant cycle apparatus for freezing or cold storage preferably employs a two-stage compression and one-stage expansion refrigerant circuit as illustrated in Fig. 10A instead of the single-stage compression refrigerant circuit described in the above-mentioned (3-1) and (3-2). In the refrigerant circuit, the refrigerant discharged from a low-stage compressor 321a is sucked into a high-stage compressor 321b. The refrigerant discharged from the high-stage compressor 321b dissipates heat and is liquefied in a condenser 322. The refrigerant flowing from the condenser 322 to an expansion valve 323 via a receiver 326, an economizer heat exchanger 375, and a dryer 327 is decompressed by the expansion valve 323 and flows into an evaporator 324. The refrigerant evaporated in the evaporator 324 is sucked into the low-stage compressor 321a via an accumulator 328. A portion of the high-pressure refrigerant flowing between the receiver 326 and the dryer 327 flows between the low-stage compressor 321a and the high-stage compressor 321b via an expansion valve 371 and the economizer heat exchanger 375 of the intermediate injection circuit 170.

A control unit (not illustrated) including a microcomputer or the like that controls the expansion valve 371 first calculates an outlet superheating degree of the economizer heat exchanger 375 from a difference in temperature (Th2-Th3) of temperature sensors Th2 and Th3. Next, the control unit controls the opening degree of the expansion valve 371 so that the outlet superheating degree approaches a constant target superheating degree. Alternatively, the outlet superheating degree may be calculated from a difference in temperature between a detection temperature of the temperature sensor Th2 and a saturation temperature Tps2 calculated from a detection value of a pressure sensor PS2. Moreover, when a temperature of a discharged gas refrigerant from the high-stage compressor 321b (a detection temperature of the temperature sensor Th1) or a degree of superheating (a detection temperature of the temperature sensor Th1 minus a saturation temperature calculated by subtracting a detection value of a pressure sensor PS1) exceeds a threshold, the control unit switches control of the expansion valve 371 from control based on the outlet superheating degree of the economizer heat exchanger 375 to control of decreasing the temperature of the discharged gas refrigerant of the compressor 321b. The control of decreasing the temperature of the discharged gas refrigerant of the compressor 321b controls the expansion valve 371 so that the refrigerant is turned into a gas-liquid two-phase state.

A control unit that controls the expansion valve 323 first calculates an outlet superheating degree of the evaporator 324 from a difference in temperature of temperature sensors Th4 and Th5 (a detection temperature of the temperature sensor Th5 - a detection temperature of the temperature sensor Th4). Next, the control unit controls the opening degree of the expansion valve 323 so that the outlet superheating degree of the evaporator 324 meets a constant target superheating degree. Alternatively, the outlet superheating degree of the evaporator 324 may be calculated from a difference in temperature between a detection temperature of the temperature sensor Th5 and a saturation temperature Tps3 calculated from a detection value of a pressure sensor PS3.

Fig. 10B illustrates a pressure and a specific enthalpy at each of points a to i in the two-stage compression and single-stage expansion refrigerant circuit illustrated in Fig. 10A.

(3-3-6)
The refrigerant cycle apparatus for freezing or cold storage preferably employs a two-stage compression and two-stage expansion refrigerant circuit as illustrated in Fig. 11 instead of the single-stage compression refrigerant circuit described in the above-mentioned (3-1) and (3-2). In the refrigerant circuit, the refrigerant discharged from a low-stage compressor 421a is sucked into a high-stage compressor 421b. The refrigerant discharged from the high-stage compressor 421b dissipates heat and is liquefied in a condenser 422. The refrigerant flowing from the condenser 422 to a first-stage expansion valve 423a is decompressed in the expansion valve 423a and turned into an intermediate pressure. Then, the refrigerant flowing to a second-stage expansion valve 423b via a receiver 426 and a dryer 427 is decompressed by the expansion valve 423b and turned into a low pressure, and flows into an evaporator 424. The refrigerant evaporated in the evaporator 424 is sucked into the low-stage compressor 421a via an accumulator 428. An intermediate-pressure gas refrigerant flowing from an upper space of the receiver 426 to a bypass circuit 470 flows to a portion between the low-stage compressor 421a and the high-stage compressor 421b.

A control unit that controls the first-stage expansion valve 423a adjusts the opening degree of the expansion valve 423a so that a detection value (high pressure) of a pressure sensor PS11 that measures the pressure of a discharge gas refrigerant of the high-stage compressor 421b falls within a predetermined range. When it is determined that the pressure of the discharge gas refrigerant of the compressor 421b is excessively high, the control unit increases the opening degree of the expansion valve 423a to decrease the high pressure.

A control unit that controls the second-stage expansion valve 423b first calculates an outlet superheating degree of the evaporator 424 from a difference in temperature of temperature sensors Th14 and Th15 (a detection temperature of the temperature sensor Th15 - a detection temperature of the temperature sensor Th14). Next, the control unit controls the opening degree of the expansion valve 423b so that the outlet superheating degree of the evaporator 424 meets a constant target superheating degree.

Fig. 11B illustrates a pressure and a specific enthalpy at each of points p to x in the two-stage compression and two-stage expansion refrigerant circuit illustrated in Fig. 11A.

(3-3-7)
It is also preferable to employ a refrigerant circuit having a hot-gas defrosting function as illustrated in Fig. 12 instead of the refrigerant circuit described in the above-mentioned (3-1). A four-way switching valve 529 is provided in a refrigerant circuit of a refrigerant cycle apparatus for freezing or cold storage. The refrigerant discharged from a compressor 521 enters a condenser 522 via the four-way switching valve 529, dissipates heat, and is liquefied in a freezing or cold-storage operation. The refrigerant output from the condenser 522 passes through a receiver 526 and a dryer 527, is decompressed in an expansion valve 523, and enters an evaporator 524 in a two-phase state. The refrigerant evaporated in the evaporator is sucked into the compressor 521 via the four-way switching valve 529 and an accumulator 528. In contrast, when it is determined that the evaporator 524 is frosted in the freezing or cold-storage operation, the control unit switches the four-way switching valve 529 (see a flow path indicated by dotted lines of the four-way switching valve 529 in Fig. 12) to perform a hot-gas defrosting operation. In the hot-gas defrosting operation, a high-temperature gas refrigerant (hot gas) discharged from the compressor 521 enters the heat exchanger 524 via the four-way switching valve 529. The heat exchanger 524 that functions as the evaporator 524 in the freezing or cold-storage operation functions as the condenser 524 in the hot-gas defrosting operation. Thus, the frost on the heat exchanger 524 is molten.

(3-3-8)
As described above, the refrigerant cycle apparatus for freezing or cold storage can use various refrigerant circuits depending on the request. Moreover, each refrigerant circuit has a variety of combinations of devices.

The compressor is appropriately selected from a rotary compressor, a reciprocation compressor, a scroll compressor, a screw compressor, and the like.

The condenser is not limited to the air-cooling condenser, and a water-cooling condenser can be selected.

For the evaporator, either of air-cooling type and water-cooling type can be selected likewise.

For the expansion valve, a mechanical expansion valve can be used alternatively to an electronic expansion valve (electric expansion valve). Moreover, a capillary tube can be used as decompressing means instead of the expansion valve.

Furthermore, various combinations of control can be applied to the control of each refrigerant circuit. For the capacity control of the compressor, control on the number of rotations in case of an inverter compressor, control on the number of a plurality of constant-speed compressors, or another control can be performed alternatively to the capacity control using the above-described bypass circuit 150. For the method of defrosting, any one of various methods can be selected, the various methods including, for example, a method of melting frost of an evaporation liquid by stopping the compressor and rotating a fan, a method using an electric heater, and a method of melting frost by spraying water, alternatively to the above-described hot-gas defrosting.

(3-3-9)
The showcase has been described in the above-mentioned embodiment as the refrigerant cycle apparatus for freezing or cold storage; however, even a refrigerant cycle apparatus mounted on a maritime container or a refrigerant cycle apparatus for a warehouse preferably uses any one of the above-described refrigerant 1A, refrigerant 1B, refrigerant 1C, refrigerant 1D, refrigerant 1E, refrigerant 2A, refrigerant 2B, refrigerant 2C, refrigerant 2D, and refrigerant 2E.

(3-3-10)
In the above-described cold-storage showcase or freezing showcase, the target value of the evaporation temperature of the evaporator is selected from the range of +10°C to -45°C; however, when a dual refrigerant cycle as illustrated in Fig. 5 or a refrigerant cycle that performs two-stage compression as illustrated in Figs. 10A and 11A is employed, the target value of the evaporation temperature of the evaporator can be set in a further low range of -20°C to -65°C. A refrigerant cycle apparatus for freezing installed on a fishing boat for the purpose of deep-sea fishing may set the target value of such a low evaporation temperature.

(3-3-11)
In the above-described showcase cooling apparatus 201, the refrigerant 2C4 is enclosed in the high-stage-side refrigerant circuit 250, and a carbon dioxide refrigerant (CO2 refrigerant) is enclosed in the plurality of low-stage-side refrigerant circuits 270. However, the combination of refrigerants is not limited to the above combination. In the dual refrigerant cycle, the high-stage-side refrigerant circuit may have enclosed therein a flammable refrigerant such as propane, and the low-stage-side refrigerant circuit may have enclosed therein the refrigerant according to the present disclosure.

(4)
The respective embodiments have been described above, and it is understood that the embodiments and details can be modified in various ways without departing from the idea and scope of the present disclosure described in the claims.

### Reference Signs List

1A, 1B, 1C, 1D, 1E: refrigerant
2A, 2B, 2C, 2D, 2E: refrigerant
121, 257, 273: compressor
321a, 321b, 421a, 421b, 521: compressor
122, 322, 422, 522: condenser (radiator)
258, 274: radiator
123, 259, 276, 323, 423a, 423b, 523: expansion valve (decompressing portion)
124, 271, 277, 324, 424, 524: evaporator (heat absorber)
1 in Fig. 1T: Charge line
2 in Fig. 1T: Sampling line
3 in Fig. 1T: Thermometer
4 in Fig. 1T: Pressure gauge
5 in Fig. 1T: Electrode
6 in Fig. 1T: Stirring blade (made of PTFE)

### Citation List

### Patent Literature

PTL 1: International Publication No. 2015/141678
PTL 2: Japanese Unexamined Patent Application Publication No. 2018-184597

## Claims

1. A refrigerant cycle apparatus for freezing or cold storage comprising:
a refrigerant circuit including a compressor, a radiator, a decompressing portion, and a heat absorber; and
a refrigerant enclosed in the refrigerant circuit, wherein
the refrigerant comprises HFO-1132(E) and HFO-1234yf,
a content rate of HFO-1132(E) is 21.0 to 28.4 mass% and a content rate of HFO-1234yf is 79.0 to 71.6 mass%, based on a total mass of HFO-1132(E) and HFO-1234yf, and
a content rate, based on the total mass of the refrigerant, of refrigerant other than HFO-1132(E) and HFO-1234yf is 0.5 mass% or less.

2. The refrigeration cycle apparatus for freezing or cold storage according to claim 1, wherein the refrigerant consists only of HFO-1132(E) and HFO-1234yf.

## Patentansprüche

1. Kältemittelkreislaufvorrichtung zum Gefrieren oder Kühllagern, umfassend:
einen Kältemittelkreislauf, der einen Kompressor, einen Kühler, einen Dekompressionsabschnitt und einen Wärmeabsorber einschließt; und
ein im Kältemittelkreislauf eingeschlossenes Kältemittel, wobei
das Kältemittel HFO-1132 (E) und HFO-1234yf umfasst,
ein Anteil von HFO-1132 (E) 21,0 bis 28,4 Massenprozentsatz beträgt und ein Anteil von HFO-1234yf 79,0 bis 71,6 Massenprozentsatz beträgt, bezogen auf die Gesamtmasse von HFO-1132 (E) und HFO-1234yf, und
ein Anteil, bezogen auf die Gesamtmasse des Kältemittels, von Kältemittel außer HFO-1132 (E) und HFO-1234yf 0,5 Massenprozentsatz oder weniger beträgt.

2. Kältemittelkreislaufvorrichtung zum Gefrieren oder Kühllagern nach Anspruch 1, wobei das Kältemittel nur aus HFO-1132 (E) und HFO-1234yf besteht.

## Revendications

1. Appareil à cycle de réfrigérant pour une congélation ou un stockage à froid comprenant :
un circuit de réfrigérant incluant un compresseur, un radiateur, une partie de décompression et un absorbeur de chaleur ; et
un réfrigérant enfermé dans le circuit de réfrigérant, dans lequel
le réfrigérant comprend HFO-1132 (E) et HFO-1234yf,
la teneur en HFO-1132 (E) est de 21,0 à 28,4 % en masse et la teneur en HFO-1234yf est de 79,0 à 71,6 % en masse, sur la base de la masse totale de HFO-1132 (E) et de HFO-1234yf, et
la teneur, sur la base de la masse totale du réfrigérant, en réfrigérant autre que HFO-1132 (E) et HFO-1234yf, est de 0,5 % en masse ou moins.

2. Appareil à cycle de fluide frigorigène pour une congélation ou un stockage à froid selon la revendication 1, dans lequel le réfrigérant consiste uniquement en HFO-1132 (E) et HFO-1234yf.
